# EUROPÄISCHE PATENTSCHRIFT

(11) **EP 4 323 256 B1**
(45) Veröffentlichungstag und Bekanntmachung des Hinweises auf die Patenterteilung: **18.03.2026**
(21) Anmeldenummer: 22719814.0
(22) Anmeldetag: 28.03.2022
(51) Int. Cl.: B62D 7/22

(54) **SERVOLENKBAUGRUPPE MIT GEZIELTER UND EINSTELLBARER KOMPENSATION VON STRASSENSEITIGEN STOSSIMPULSEN ZUM LENKGETRIEBE SOWIE VERFAHREN ZUM EINRICHTEN EINER SERVOLENKBAUGRUPPE**
POWER STEERING ASSEMBLY WITH TARGETED AND ADJUSTABLE COMPENSATION OF ROADSIDE SHOCK PULSES TO THE STEERING GEAR AND METHOD FOR DESIGNING A POWER STEERING ASSEMBLY
ENSEMBLE DE DIRECTION ASSISTÉE À COMPENSATION CIBLÉE ET RÉGLABLE D'IMPULSIONS DE CHOC CÔTÉ ROUTE SUR LE MÉCANISME DE DIRECTION ET PROCÉDÉ D'INSTALLATION D'UN ENSEMBLE DE DIRECTION ASSISTÉE

(30) Priorität: 16.04.2021 DE 102021109655
(43) Veröffentlichungstag der Anmeldung: 21.02.2024
(73) Patentinhaber: KNORR-BREMSE Systeme für Nutzfahrzeuge GmbH, 80809 München (DE)
(72) Erfinder: LETTOW, Dirk, 42327 Wuppertal (DE); MÜLLER, Jens-Hauke, 42553 Velbert-Neviges (DE); KIRSCHBAUM, Sven, 40822 Mettmann (DE); EPSTEIN, Dimitri, 42275 Wuppertal (DE)
(86) Internationale Anmeldenummer: PCT/EP2022/058158
(87) Internationale Veröffentlichungsnummer: WO 2022/218682

(56) Entgegenhaltungen:
- WO-A1-2022/017765
- CH-A- 344 316
- DE-A1- 2 060 017
- US-A- 1 350 285

## Beschreibung

Die vorliegende Erfindung betrifft eine Servolenkbaugruppe für eine elektro-mechanische Servolenkung von Kraftfahrzeugen nach dem Oberbegriff des Patentanspruchs 1. Ferner betrifft die Erfindung ein Verfahren zum Einrichten einer Servolenkbaugruppe für eine elektro-mechanische Servolenkung von Kraftfahrzeugen nach dem Oberbegriff des Patentanspruchs 9.

Servolenkbaugruppen sind in einer Vielzahl aus dem Stand der Technik bekannt. Dabei umfassen Servolenkbaugruppen vor allem hinsichtlich des in der Servolenkbaugruppe verbauten Lenkgetriebes mehrere für mechanische Belastungen empfindliche Komponenten. So weist das Lenkgetriebe beispielsweise in der Regel eine Spindel und eine Kugelumlaufmutter mit Kugeln bzw. einer Kugelkette, sowie ferner Verzahnungspaarungen, etwa in Form einer Außenverzahnung der Kugelumlaufmutter, die in eine Segmentverzahnung einer Segmentwelle eingreift, auf. Diese Komponenten sind für schlagartige eingeführte mechanische Kräfte bzw. Belastungen besonders empfindlich.

Eine Quelle für solche schlagartig eingeführte Belastungen sind zum Beispiel straßenseitige Stoßimpulse. So können etwa Unebenheiten in der Straße zu Stö-ßen im Kraftfahrzeug führen, die beispielsweise zu ungewünschten schlagartigen Bewegungen in einer Servolenkbaugruppe führen können. Für die Kompensation von straßenseitigen Stößen ist im Stand der Technik regelmäßig lediglich das Stoßdämpfersystem der Radaufhängung verantwortlich. Ein solches System ist jedoch dahingehend verbesserungswürdig, dass in empfindliche Komponenten eines Lenkgetriebes eingeführte Belastungen bzw. Spannungen noch gezielter kompensiert bzw. absorbiert werden könnten.

Dieses Problem wird nachfolgend am Beispiel eines Nutzfahrzeugs ausgeführt, wobei dies nicht beschränkend für die vorliegende Erfindung zu verstehen ist. Nutzfahrzeuge weisen regelmäßig Servolenkbaugruppen mit einer Kugelumlauflenkung auf. Dazu weist die Servolenkbaugruppe ein Lenkgetriebe auf, welches dazu eingerichtet ist, eine von einem Lenkgeber, also etwa von einem Lenkrad, über eine Eingangsseite des Lenkgetriebes eingeleitete Drehbewegung an eine Ausgangsseite des Lenkgetriebes weiterzuleiten. Die Eingangsseite kann dabei beispielsweise durch eine Eingangswelle und die Ausgangsseite durch eine Ausgangswelle zum Beispiel in Form einer Segmentwelle gebildet sein. Innerhalb des Lenkgetriebes kann dann die eingeleitete Drehbewegung der Eingangswelle etwa dadurch bestimmungsgemäß umgewandelt werden, dass die Eingangswelle als eine Spindel ausgebildet ist und durch ihre Drehbewegung eine translatorische Bewegung einer den Spindelabschnitt umgreifenden Kugelumlaufmutter sorgt, wobei diese translatorische Bewegung ebenso als Axialbewegung der Kugelumlaufmutter oder auch des Kolbens bezeichnet werden kann. Die Kugelumlaufmutter wiederum ist regelmäßig mit einer Außenverzahnung versehen. Die Kugelumlaufmutter kann sodann mit der Außenverzahnung, die mit einer Segmentverzahnung der Segmentwelle kämmend in Eingriff steht, dafür sorgen, dass die translatorische Bewegung der Kugelumlaufmutter in eine Drehbewegung der Segmentwelle bzw. Ausgangswelle umgewandelt und somit an der Ausgangsseite des Lenkgetriebes ausgeleitet wird. An diese Ausgangsseite anschließend ist regelmäßig ein Lenkstockhebel und an diesen gelenkig angebunden eine Schubstange vorgesehen. Die Schubstange der Servolenkbaugruppe nimmt letztlich die aus der Ausgangsseite des Lenkgetriebes ausgeleitete Drehbewegung auf und führt selbst bei einem Lenkvorgang bestimmungsgemäß eine translatorische Schubstangenbewegung - auch Axialbewegung genannt - durch. Dabei ruft diese translatorische Schubstangenbewegung eine bestimmungsgemäße Drehbewegung wenigstens eines Rads des Kraftfahrzeugs um eine Lenkachse hervor.

Bei auf diese Weise aufgebauten Servolenkbaugruppen können straßenseitige Stoßimpulse zu schlagartigen Bewegungen in vielen der genannten Komponenten der Servolenkbaugruppe führen, welche wiederum zu ungewünschten in das Innere des Lenkgetriebes eingeleiteten Belastungen bzw. Spannungen führen. Bislang werden solche Kräfte bzw. Belastungen und Spannungen in den Servolenkbaugruppen des Standes der Technik selbst in der Regel hauptsächlich durch die Hydraulik der Servolenkbaugruppen kompensiert.

Regelmäßig ist im Stand der Technik außerdem ein hoher Aufwand für die Auslegung solcher Servolenkbaugruppen für den jeweiligen konkreten Anwendungsfall erforderlich. So sind häufig sehr genaue, aufwändige Auslegungs- und Herstellungsverfahren notwendig, um den Schaltpunkt eventuell vorgesehener Dämpfungselemente für ein Lenkgetriebe bzw. für eine Servolenkbaugruppe richtig zu definieren. Dies führt zu den Problemen, dass, wenn die einzelnen grundsätzlich verbauten Komponenten nicht korrekt konzipiert oder produziert sind, es zu einem indirekteren Lenkverhalten kommen kann. Es muss eine zeit- und kostenintensive individuelle, auf den Anwendungsfall angepasste Auslegung der Lenkgetriebe für die Servolenkbaugruppen erfolgen, um solche negativen Auswirkungen beispielsweise in Form eines indirekten Lenkverhaltens zu vermeiden. Die entsprechenden Verfahren zum Einrichten eines einer Servolenkbaugruppe sind aus diesen Gründen im Stand der Technik sehr aufwendig.

Konkret ist aus dem Stand der Technik aus der US 1 350 285 A eine Lenkvorrichtung bekannt, mit einem T-Hebel und diesem zusammenwirkenden Federn, zur Unfallreduktion beim Zusammenstoß von Vorderrädern mit Steinen oder Hindernissen auf der Fahrbahn. Ferner ist aus CH 344 316 A eine Lenkvorrichtung bekannt, mit einem stoß- und geräuschdämpfenden Mechanismus zwischen Lenkgestänge und Lenkgetriebe. Die DE 20 60 017 A1 beschreibt eine Fahrzeuglenkung mit axial zwischen Lenkschnecke und Gehäuse eingeschalteten Druckfedern, um von der Fahrbahn eingeleitete Stöße zu dämpfen und nicht auf das Lenkrad zu übertragen.

Vor diesem Hintergrund liegt der Erfindung die Aufgabe zugrunde, eine Servolenkbaugruppe der eingangs genannten Art dahingehend weiterzubilden, dass das Lenkgetriebe besser vor straßenseitigen Stoßimpulsen geschützt wird. Außerdem soll der Aufwand für die Auslegung und Herstellung verringert werden, sowie ein indirektes Lenkverhalten auf möglichst simple Weise vermieden werden. Der Erfindung liegt daher ebenso die Aufgabe zugrunde, ein Verfahren zum Einrichten einer Servolenkbaugruppe für eine elektro-mechanische Servolenkung von Kraftfahrzeugen bereitzustellen, das einen geringeren Aufwands zum effektiven Vermeiden eines indirekten Lenkverhaltens bedarf.

Diese Aufgabe wird durch eine Servolenkbaugruppe mit den Merkmalen des kennzeichnenden Teils von Anspruch 1 gelöst. Die Aufgabe ist weiterhin durch ein Verfahren mit den Merkmalen des kennzeichnenden Teils von Anspruch 9 gelöst. Weitere, besonders vorteilhafte Ausgestaltungen der Erfindung offenbaren die abhängigen Patentansprüche.

Wesentlich ist die grundsätzliche Überlegung, die Servolenkbaugruppe so auszugestalten, dass im Rahmen der Servolenkbaugruppe eine eigene, einstellbare Absorptionseinheit bestimmungsgemäß dafür vorgesehen ist, gezielt das Lenkgetriebe vor aus straßenseitigen Stoßimpulsen resultierenden Belastungen bzw. Spannungen zu schützen. Dazu kompensiert die einstellbare Absorptionseinheit gezielt solche Bewegungen und die daraus resultierenden Belastungen, indem in der einstellbaren Absorptionseinheit kinetische in potentielle Energie umgewandelt wird. Es werden Kräfte bzw. Belastungen in dem Lenkgetriebe verringert, die ohne das Vorliegen der einstellbaren Absorptionseinheit im Wesentlichen ungedämpft bzw. nicht abgeschwächt wären oder lediglich durch die Hydraulik der Servolenkung gedämpft bzw. kompensiert werden würden. Die einstellbare Absorptionseinheit ist dazu zur Umwandlung von kinetischer Energie in potentielle Energie eingerichtet und sorgt dafür, dass Erschütterungen gezielt abgefedert bzw. absorbiert werden. Vorzugsweise ist die einstellbare Absorptionseinheit dazu elastisch ausgebildet. Die einstellbare Absorptionseinheit ist vorteilhaft derart eingerichtet, dass zumindest kleine Relativbewegungen der benachbarten, an die einstellbare Absorptionseinheit angrenzenden Bauteile der Servolenkbaugruppe zugelassen werden.

Weiterhin ist für die Erfindung die Erkenntnis wesentlich, dass die beschriebenen Nachteile aus dem Stand der Technik dadurch vermieden werden können, dass zusätzlich eine separate Vorspanneinheit vorgesehen ist, die zur Einstellung der einstellbaren Absorptionseinheit genutzt werden kann. So kann eine individuell auf den jeweiligen Anwendungsfall angepasste Vorspannkraft in der einstellbaren Absorptionseinheit eingestellt werden, indem die separate Vorspanneinheit auf simple Weise die einstellbare Absorptionseinheit um ein gewünschtes Maß komprimiert. Dadurch kann die einstellbare Absorptionseinheit auf einfache Weise genau so eingestellt werden, dass effektiv ein indirektes Lenkverhalten vermieden werden kann. Dadurch wird auch der Aufwand bei den Herstellungsverfahren von und insbesondere zur Auslegung von Servolenkbaugruppen erheblich verringert. So sind keine sehr genauen, aufwändigen Auslegungs- und Herstellungsverfahren mehr notwendig, um den Schaltpunkt der einstellbaren Absorptionseinheit richtig zu definieren. Dadurch kann selbst für den Fall, dass Bauteile nicht korrekt konzipiert oder produziert sind, ein indirekteres Lenkverhalten effektiv vermieden werden, indem die separate Vorspanneinheit einfach die einstellbare Absorptionseinheit um das gewünschte Maß vorspannt.

Die vorschlagsgemäße Servolenkbaugruppe für eine elektro-mechanische Servolenkung von Kraftfahrzeugen, bei der es sich insbesondere um eine Servolenkbaugruppe für eine elektro-mechanische Servolenkung von Nutzfahrzeugen handeln kann, weist ein Lenkgetriebe auf. Dieses Lenkgetriebe ist dazu eingerichtet ist, eine von einem Lenkgeberüber eine Eingangsseite des Lenkgetriebes eingeleitete Drehbewegung an eine Ausgangsseite des Lenkgetriebes weiterzuleiten. Bei dem Lenkgeber kann es sich insbesondere um ein Lenkrad handeln. Die eingeleitete Drehbewegung kann über eine Eingangswelle des Lenkgetriebes eingeleitet sein. Vorschlagsgemäß ist die Servolenkbaugruppe dazu eingerichtet, eine aus der Ausgangsseite des Lenkgetriebes ausgeleitete Bewegung in eine Drehbewegung wenigstens eines Rads des Kraftfahrzeugs um eine Lenkachse umzuwandeln.

Die vorschlagsgemäße Servolenkbaugruppe ist dadurch gekennzeichnet, dass eine einstellbare Absorptionseinheit zur wenigstens teilweisen Absorption von straßenseitigen, über das Rad des Kraftfahrzeugs aufgenommenen Stößen vorgesehen ist. Ferner ist vorschlagsgemäß eine separate Vorspanneinheit vorgesehen, welche separate Vorspanneinheit derart mit der einstellbaren Absorptionseinheit zusammenwirkend eingerichtet ist, dass eine vorbestimmte Vorspannkraft auf die einstellbare Absorptionseinheit ausgeübt ist.

Bei dem vorschlagsgemäßen Verfahren zum Einrichten einer Servolenkbaugruppe für eine elektro-mechanische Servolenkung von Kraftfahrzeugen handelt es sich um ein Verfahren zum Einrichten einer vorschlagsgemäßen Servolenkbaugruppe, wie vorstehend bzw. nachfolgend beschrieben, konkret einer Servolenkbaugruppe nach einem der Ansprüche 1 bis 8.

Das vorschlagsgemäße Verfahren ist dadurch gekennzeichnet, dass eine einstellbare Absorptionseinheit zur wenigstens teilweisen Absorption von straßenseitigen, über das Rad des Kraftfahrzeugs aufgenommenen Stößen in den Umwandlungsstrang der Lenkbewegung der gesamten Servolenkbaugruppe integriert wird. Ferner wird vorschlagsgemäß eine separate Vorspanneinheit vorgesehen und schließlich wird eine vorbestimmte Vorspannkraft eingestellt, welche vorbe-stimmte Vorspannkraft auf die einstellbare Absorptionseinheit ausgeübt wird, indem die separate Vorspanneinheit die einstellbaren Absorptionseinheit komprimiert.

Grundsätzlich kann die einstellbare Absorptionseinheit wenigstens in Teilen (beispielsweise wenigstens ein elastisches Element bzw. eine Gruppe elastischer Elemente für den Fall, dass die einstellbare Absorptionseinheit durch mehrere, unterschiedlich angeordnete, elastische Elemente gebildet ist) um ein beliebiges gewünschtes vorbestimmtes Maß komprimiert werden. Dabei ist unter "beliebig" selbstverständlich ein Maß in gewissen Grenzen, also in einem dem Bauraum angepassten Bereich, zu verstehen. Konkret können beispielsweise entweder eine Ausgleichsscheibe oder auch mehrere Ausgleichsscheiben einer bestimmten Dicke vorgesehen sein, die die einstellbare Absorptionseinheit eben um jene Dicke komprimieren. Regelmäßig wird hierzu vorzugsweise die einstellbare Absorptionseinheit einfach durch die separate Vorspanneinheit in axialer Richtung zusammengedrückt, da durch das Anordnen der Ausgleichsscheibe der für die einstellbare Absorptionseinheit verbleibende zur Verfügung stehende Bauraum reduziert wird. Alternativ können auch Vorspannmuttern als separate Vorspanneinheit oder anders ausgestaltete Komponenten, die ein in ein Gegengewinde eingreifendes Gewinde aufweisen, vorgesehen sein. Dann kann das Maß der Kompression der einstellbaren Absorptionseinheit vorteilhaft dadurch individuell eingestellt werden, dass die Komponente mit Gewinde um ein gewünschtes Maß in das Gegengewinde hineingedreht wird und somit die einstellbare Absorptionseinheit um jenes Maß komprimiert.

Grundsätzlich ist die vorschlagsgemäße einstellbare Absorptionseinheit eigens in die Servolenkbaugruppe integriert und ein Bestandteil dieser. Dazu kann die Absorptionseinheit beispielsweise in den Umwandlungsstrang der Lenkbewegung der gesamten Anordnung integriert sein, sprich von dem Lenkgeber, also beispielsweise dem Lenkrad, aus in Richtung des zu lenkenden Rads gesehen zwischen der Eingangsseite des Lenkgetriebes und der beispielsweise für die Lenkung sorgenden Schubstange.

Im Ergebnis werden in vorteilhafter Weise schlagartige Bewegungen in der vorschlagsgemäßen Servolenkbaugruppe durch die einstellbare Absorptionseinheit gezielt kompensiert und die resultierenden Belastungen wenigstens teilweise absorbiert. Auf diese Weise können die Stoßimpulse, wenn sie bzw. die daraus resultierenden Kräfte von der Straße, entweder über das Rad beispielsweise an eine Schubstange und gegebenenfalls an die weiteren, an die beispielsweise vorgesehene Schubstange anschließenden Komponenten der Servolenkbaugruppe, oder aber auch über das Gehäuse des Lenkgetriebes weitergegeben werden, gezielt abgefedert bzw. kompensiert werden. Dadurch ist nicht mehr nur die Hydraulik der Servolenkbaugruppe allein für eine solche Kompensation der straßenseitigen Stoßimpulse verantwortlich und somit das Lenkgetriebe der vorschlagsgemäßen Servolenkbaugruppe, und insbesondere die innerhalb des Lenkgetriebes angeordneten empfindlichen Komponenten, besser vor straßenseitigen Stoßimpulsen geschützt.

Grundsätzlich ist die Eingangsseite des Lenkgetriebes durch eine Eingangswelle gebildet, wobei die Eingangswelle zumindest abschnittsweise als Spindel ausgebildet ist. Die Ausgangsseite des Lenkgetriebes wiederum kann regelmäßig durch eine Ausgangswelle, vorzugsweise durch eine Segmentwelle, gebildet sein. Die aus der Ausgangsseite des Lenkgetriebes ausgeleitete Bewegung kann unmittelbar oder mittelbar von der Ausgangsseite, beispielsweise über die Segmentwelle, an beispielsweise eine Schubstange weitergegeben werden. So kann die Ausgangswelle etwa mit einem Lenkstockhebel fest, insbesondere verdrehfest bzw. rotatorisch fest, verbunden sein. Der Lenkstockhebel kann dann eine Drehbewegung der Ausgangswelle aufnehmen und ebenfalls eine Drehbewegung ausführen. Sodann kann beispielsweise an dem der Ausgangswelle abgewandten Ende des Lenkstockhebels ein Kugelgelenk vorgesehen sein, welches den Lenkstockhebel mit der Schubstange verbindet. Das Kugelgelenk kann dementsprechend dafür Sorge tragen, dass die aus der Ausgangsseite des Lenkgetriebes ausgeleiteten Bewegung in Form der Drehbewegung der Ausgangswelle und somit der Drehbewegung des Lenkstockhebels an die Schubstange zur Durchführung einer translatorischen Schubstangenbewegung übertragen wird.

Bei einer solchen Ausführungsform mit einer Schubstange ist die Schubstange demnach zur Aufnahme der aus der Ausgangsseite des Lenkgetriebes ausgeleiteten Bewegung und zur Durchführung einer translatorischen Schubstangenbewegung vorgesehen, wobei die Schubstange derart angeordnet ist, dass die translatorische Schubstangenbewegung die Drehbewegung des wenigstens einen Rads des Kraftfahrzeugs um die Lenkachse hervorruft.

Die einstellbare Absorptionseinheit kann grundsätzlich vorteilhaft derart angeordnet sein, dass sie in das Lenkgetriebe integriert und, vorzugsweise, zwischen der Eingangsseite und der Ausgangsseite des Lenkgetriebes angeordnet ist. Die einstellbare Absorptionseinheit kann grundsätzlich als elastisches Element, etwa als Elastomer oder Federpaket, ausgebildet sein, bzw. es können auch mehrere elastische Elemente als einstellbare Absorptionseinheit vorgesehen sein. Grundsätzlich können Relativbewegungen angrenzender Komponenten durch das elastischen Element bzw. die elastischen Elementen der einstellbaren Absorptionseinheit zugelassen werden, wodurch kinetische Energie mittels der einstellbaren Absorptionseinheit aufgenommen wird, was den gewünschten Kompensationseffekt bewirkt. Grundsätzlich kann vorzugsweise vorgesehen sein, dass die einstellbare Absorptionseinheit aus wenigstens einem elastischen Element, insbesondere aus wenigstens einer Tellerfeder und/oder aus wenigstens einer Spiralfeder und/oder aus wenigstens einem Elastomer, gebildet ist.

Vorschlagsgemäß ist in vorteilhafter Weise gemäß einer erfindungsgemäßen Alternative vorgesehen, dass das Lenkgetriebe eine als Spindel ausgebildete Eingangswelle und eine Kugelumlaufmutter zur Umsetzung der Drehbewegung der Eingangswelle in eine translatorische Bewegung aufweist, wobei ein Verzahnungsabschnitt die Kugelumlaufmutter außenseitig umgebend vorgesehen ist. Dabei ist vorgesehen, dass die einstellbare Absorptionseinheit derart angeordnet ist, dass die translatorische Bewegung der Kugelumlaufmutter über die einstellbare Absorptionseinheit auf den Verzahnungsabschnitt übertragen wird und umgekehrt. Auf diese Weise können straßenseitige Stoßimpulse besonders vorteilhaft im Lenkgetriebe selbst effektiv kompensiert werden.

Vorschlagsgemäß ist außerdem in vorteilhafter Weise vorgesehen, dass das Lenkgetriebe eine als Spindel ausgebildete Eingangswelle und eine Kugelumlaufmutter zur Umsetzung der Drehbewegung der Eingangswelle in eine translatorische Bewegung aufweist. Vorschlagsgemäß ist gemäß zwei weiteren erfindungsgemäßen Alternative vorgesehen, dass die einstellbare Absorptionseinheit wenigstens teilweise als axiale elastische Spindellagerung der Eingangswelle gebildet ist. Auf diese Weise können straßenseitige Stoßimpulse besonders vorteilhaft auf der Eingangsseite des Lenkgetriebes effektiv kompensiert werden.

Vorschlagsgemäß ist gemäß einer dieser zwei weiteren erfindungsgemäßen Alternativen in vorteilhafter Weise vorgesehen, dass die als axiale elastische Spindellagerung der Eingangswelle gebildete, einstellbare Absorptionseinheit durch wenigstens ein elastisches Element, insbesondere durch wenigstens eine Tellerfeder, gebildet ist, wobei das wenigstens eine elastische Element an eine Lageranordnung der Eingangswelle zur drehbaren Lagerung der Eingangswelle in einem Gehäuse derart angrenzend angeordnet ist, dass die Lageranordnung der Eingangswelle über das wenigstens eine elastische Element axial elastisch im Gehäuse aufgenommen ist. Dabei ist das wenigstens eine elastische Element an einen Außenring der Lageranordnung der Eingangswelle in dem Gehäuse derart angrenzend angeordnet. Unter axial elastisch ist insbesondere axial auf die Eingangswelle bezogen zu verstehen. Es wurde in überraschender Weise durch die vorliegende Erfindung erkannt, dass trotz des konstruktiven Mehraufwands in Form der Ergänzung der Lageranordnung der Eingangswelle dennoch die Wirtschaftlichkeit der gesamten Servolenkbaugruppe erhöht werden kann. Denn es werden vorteilhaft gezielt empfindliche Komponenten des Lenkgetriebes vor straßenseitigen Stoßimpulsen geschützt und somit die Langlebigkeit erhöht.

Vorschlagsgemäß ist gemäß der weiteren dieser zwei weiteren erfindungsgemäßen Alternativen in vorteilhafter Weise vorgesehen, dass die als Spindel ausgebildete Eingangswelle mehrteilig durch zumindest einen der Kugelumlaufmutter zugewandten Spindelabschnitt und einen Eingangsabschnitt ausgebildet ist, und dass der Spindelabschnitt und der Eingangsabschnitt rotatorisch fest aber über die als axiale elastische Spindellagerung der Eingangswelle, vorzugsweise in Form von wenigstens einem elastischen Element, besonders bevorzugt in Form von Ringfedern, gebildete, einstellbare Absorptionseinheit axial elastisch miteinander verbunden sind. Es wurde in überraschender Weise durch die vorliegende Erfindung erkannt, dass trotz des konstruktiven Mehraufwands in Form der Aufteilung der Eingangswelle und vor allem trotz der damit einhergehenden eigentlichen Schwächung der Eingangswelle und somit der gesamten Servolenkbaugruppe dennoch die Langlebigkeit der gesamten Servolenkbaugruppe erhöht werden kann. Denn es werden vorteilhaft gezielt empfindliche Komponenten des Lenkgetriebes vor straßenseitigen Stoßimpulsen geschützt.

Eine bevorzugte Ausführungsform der Servolenkbaugruppe ist dadurch gekennzeichnet, dass die separate Vorspanneinheit wenigstens eine erste Ausgleichsscheibe umfasst. Dadurch ist auf besonders einfache Weise die Vorspannkraft auf die einstellbare Absorptionseinheit individuell gestaltbar. Eine individuelle Anpassungsfähigkeit an den Anwendungsfall der Servolenkbaugruppe ist möglich, ohne eine aufwendige Auslegung der einzelnen Komponenten, insbesondere der elastischen Elemente der einstellbaren Absorptionseinheit, vornehmen zu müssen. Es können außerdem effektiv Ungenauigkeiten auch in der Herstellung der Servolenkbaugruppe kompensiert werden. Vorzugsweise bildet die erste Ausgleichsscheibe eine unmittelbare Kontaktfläche als Anlagefläche zu der einstellbaren Absorptionseinheit bzw. einigen elastischen Elementen dieser aus.

Zusätzlich kann vorzugsweise vorgesehen sein, dass die separate Vorspanneinheit ferner wenigstens eine zweite Ausgleichsscheibe umfasst. Insbesondere kann die zweite Ausgleichsscheibe eine zweite Dicke aufweisen, die von einer ersten Dicke der ersten Ausgleichsscheibe abweicht. Hierdurch können besonders einfach Anpassungen auf den spezifischen Anwendungsfall für die Servolenkbaugruppe vorgenommen werden. Eine individuelle Anpassungsfähigkeit an den Anwendungsfall der Servolenkbaugruppe ist möglich, ohne eine aufwendige Auslegung der einzelnen Komponenten, insbesondere der elastischen Elemente der einstellbaren Absorptionseinheit, vornehmen zu müssen. Es können außerdem effektiv Ungenauigkeiten auch in der Herstellung der Servolenkbaugruppe kompensiert werden. Vorzugsweise sind die erste Ausgleichsscheibe und die zweite Ausgleichsscheibe unmittelbar anliegend aneinander angeordnet.

Gemäß einer weiteren Ausführungsform der Servolenkbaugruppe ist vorgesehen, dass die separate Vorspanneinheit eine Vorspannmutter umfasst. Dadurch ist auf besonders einfache Weise die Vorspannkraft auf die einstellbare Absorptionseinheit individuell gestaltbar. Eine individuelle Anpassungsfähigkeit an den Anwendungsfall der Servolenkbaugruppe ist möglich, ohne eine aufwendige Auslegung der einzelnen Komponenten, insbesondere der elastischen Elemente der einstellbaren Absorptionseinheit, vornehmen zu müssen. Es können außerdem effektiv Ungenauigkeiten auch in der Herstellung der Servolenkbaugruppe kompensiert werden. Vorzugsweise kann die Vorspannmutter einfach weiter in das passende Gegengewinde hineingedreht werden, um die Vorspannkraft zu erhöhen. Weiter vorzugsweise weist die Vorspannmutter eine Stirnfläche auf, die eine unmittelbare Kontaktfläche als Anlagefläche zu der einstellbaren Absorptionseinheit bzw. einigen elastischen Elementen dieser ausbildet.

Gemäß einer weiteren Ausführungsform der Servolenkbaugruppe ist vorgesehen, dass die separate Vorspanneinheit derart mit der einstellbaren Absorptionseinheit zusammenwirkend eingerichtet ist, dass die vorbestimmte Vorspannkraft mittels zweier über Gewinde und Gegengewinde miteinander in Eingriff stehenden Komponenten, vorzugsweise im Wesentlichen stufenlos, einstellbar ist. Unter im Wesentlichen stufenlos ist dabei zu verstehen, dass nicht beliebig hohe oder niedrige Werte angenommen werden können, also die Komponenten nicht beliebig weit gegeneinander verdrehbar sind, sondern um einen gewissen Bereich zueinander verdreht werden können. Außerdem können auch kleine Sprünge in der resultierenden Vorspannkraft auftreten, wenn die Komponenten gegeneinander verdreht werden. Insofern ist der Begriff stufenlos nicht absolut zu verstehen. Hierdurch ist auf einfache Weise eine individuelle Anpassung der Vorspannkraft möglich.

Gemäß einer weiteren Ausführungsform der Servolenkbaugruppe ist vorgesehen, dass die separate Vorspanneinheit und die einstellbare Absorptionseinheit im montierten Zustand in axialer Richtung relativ zueinander zumindest teilweise verschiebbar sind. Eine effektive Kompensation der straßenseitigen Stöße wird somit gewährleistet.

Gemäß einer weiteren Ausführungsform der Servolenkbaugruppe ist vorgesehen, dass die separate Vorspanneinheit im montierten Zustand gegen eine Rotation in Umfangsrichtung, insbesondere über einen in eine Nut eingreifenden Sicherungsbolzen, gesichert ist. Die Sicherheit einer gleichmäßigen Kompensationswirkung der einstellbaren Absorptionseinheit wird somit gewährleistet. Ein ungewünschtes Verstellen der Vorspannkraft wird effektiv verhindert.

Gemäß einer weiteren Ausführungsform der Servolenkbaugruppe ist vorgesehen, dass die separate Vorspanneinheit eine Stirnfläche aufweist, welche Stirnfläche zur Ausübung der vorbestimmten Vorspannkraft auf die einstellbare Absorptionseinheit eine Kontaktfläche zur unmittelbaren Anlage an die einstellbare Absorptionseinheit ausbildet. Eine effektive und gleichmäßige Vermittlung der Vorspannkraft von Vorspanneinheit auf einstellbare Absorptionseinheit wird somit gewährleistet.

Eine bevorzugte Ausführungsform des Verfahrens zum Einrichten der Servolenkbaugruppe ist dadurch gekennzeichnet, dass als separate Vorspanneinheit wenigstens eine erste Ausgleichsscheibe an die einstellbare Absorptionseinheit angrenzend zur Vorspannung durch gezielte Kompression der einstellbaren Absorptionseinheit vorgesehen wird. Dadurch ist auf besonders einfache Weise die auf die einstellbare Absorptionseinheit wirkende Vorspannkraft individuell gestaltbar. Eine individuelle Anpassungsfähigkeit an den Anwendungsfall der Servolenkbaugruppe ist möglich, ohne eine aufwendige Auslegung der einzelnen Komponenten, insbesondere der elastischen Elemente der einstellbaren Absorptionseinheit, vornehmen zu müssen. Es können außerdem effektiv Ungenauigkeiten auch in der Herstellung der Servolenkbaugruppe kompensiert werden. Das Verfahren ist somit effizient und einfach. Vorzugsweise bildet die erste Ausgleichsscheibe eine unmittelbare Kontaktfläche als Anlagefläche zu der einstellbaren Absorptionseinheit bzw. einigen elastischen Elementen dieser aus.

Weiter vorzugsweise kann vorgesehen sein, dass ferner eine zweite Ausgleichsscheibe an die einstellbare Absorptionseinheit angrenzend zur Vorspannung durch gezielte Kompression der einstellbaren Absorptionseinheit vorgesehen wird. Dabei weist die zweite Ausgleichsscheibe vorzugsweise eine zweite Dicke auf, die von einer ersten Dicke der ersten Ausgleichsscheibe abweicht. Hierdurch können besonders einfach Anpassungen auf den Anwendungsfall für die Servolenkbaugruppe vorgenommen werden. Eine individuelle Anpassungsfähigkeit an den Anwendungsfall der Servolenkbaugruppe ist möglich, ohne eine aufwendige Auslegung der einzelnen Komponenten, insbesondere der elastischen Elemente der einstellbaren Absorptionseinheit, vornehmen zu müssen. Es können außerdem effektiv Ungenauigkeiten auch in der Herstellung der Servolenkbaugruppe kompensiert werden. Vorzugsweise sind die erste Ausgleichsscheibe und die zweite Ausgleichsscheibe unmittelbar anliegend aneinander angeordnet.

Gemäß einer weiteren Ausführungsform des Verfahrens ist vorgesehen, dass als separate Vorspanneinheit eine Vorspannmutter an die einstellbare Absorptionseinheit angrenzend zur Vorspannung durch gezielte Kompression der einstellbaren Absorptionseinheit vorgesehen wird. Dadurch ist auf besonders einfache Weise die Vorspannkraft auf die einstellbare Absorptionseinheit individuell gestaltbar. Eine individuelle Anpassungsfähigkeit an den Anwendungsfall der Servolenkbaugruppe ist möglich, ohne eine aufwendige Auslegung der einzelnen Komponenten, insbesondere der elastischen Elemente der einstellbaren Absorptionseinheit, vornehmen zu müssen. Es können außerdem effektiv Ungenauigkeiten auch in der Herstellung der Servolenkbaugruppe kompensiert werden. Vorzugsweise kann die Vorspannmutter einfach weiter in das passende Gegengewinde hineingedreht werden, um die Vorspannkraft zu erhöhen. Weiter vorzugsweise weist die Vorspannmutter eine Stirnfläche auf, die eine unmittelbare Kontaktfläche als Anlagefläche zu der einstellbaren Absorptionseinheit bzw. einigen elastischen Elementen dieser ausbildet.

Gemäß einer weiteren Ausführungsform des Verfahrens ist vorgesehen, dass die vorbestimmte Vorspannkraft eingestellt wird, indem eine ein Gewinde aufweisende erste Komponente der separaten Vorspanneinheit und eine mit der ersten Komponente in Eingriff stehende und ein Gegengewinde aufweisende zweite Komponenten gegeneinander verdreht werden. Vorzugsweise kann die Vorspannkraft somit im Wesentlichen stufenlos eingestellt werden. Unter im Wesentlichen stufenlos ist dabei zu verstehen, dass nicht beliebig hohe oder niedrige Werte angenommen werden können, also die Komponenten nicht beliebig weit gegeneinander verdrehbar sind, sondern um einen gewissen Bereich zueinander verdreht werden können. Außerdem können auch kleine Sprünge in der resultierenden Vorspannkraft auftreten, wenn die Komponenten gegeneinander verdreht werden. Insofern ist der Begriff stufenlos nicht absolut zu verstehen. Hierdurch ist auf einfache Weise eine individuelle Anpassung der Vorspannkraft möglich. Je weiter die Komponenten gegeneinander verdreht werden, um so höher ist das Maß der Kompression der einstellbaren Absorptionseinheit, sprich auch der auf diese wirkende Vorspannkraft.

Gemäß einer weiteren Ausführungsform des Verfahrens ist vorgesehen, dass die separate Vorspanneinheit schließlich gegen ein Verdrehen in Umfangsrichtung gesichert wird.

Zusätzlich kann vorzugsweise vorgesehen sein, dass die Sicherung über das Vorsehen eines in eine Nut im Umfangsrichtung formschlüssig eingreifenden Sicherungsbolzens vorgenommen wird.

Eine effektive Kompensation der straßenseitigen Stöße wird somit gewährleistet. Die Sicherheit einer gleichmäßigen Kompensationswirkung der einstellbaren Absorptionseinheit wird garantiert, da ein ungewünschtes Verstellen der Vorspannkraft effektiv verhindert wird.

Die vorstehend und nachfolgend beschrieben, sich auf die vorschlagsgemäße Servolenkbaugruppe beziehenden Merkmale sowie die resultierenden Vorteile sind, wo technisch sinnvoll, auf das vorschlagsgemäße Verfahren übertragbar, und umgekehrt.

Weitere Merkmale und Vorteile der Erfindung ergeben sich aus den Ansprüchen sowie der nachfolgenden Beschreibung nicht einschränkend zu verstehender Ausführungsbeispiele der Erfindung, die im Folgenden unter Bezugnahme auf die Zeichnung näher erläutert wird. In dieser Zeichnung zeigen:
- Fig. 1: eine schematische Darstellung eines Lenkgetriebes,
- Fig. 2: eine schematische Darstellung eines Kraftfahrzeugs mit einem Lenkgetriebe aus Fig. 1,
- Fig. 3: teilweise ein Lenkgetriebe einer vorschlagsgemäßen Servolenkbaugruppe in einer Schnittansicht, in Fig. 3 a) in einer schematischen Ansicht, sowie in Fig. 3 b) in einer Schnittansicht A-A aus Fig. 3 a),
- Fig. 4: als Ausgleichsscheiben ausgebildete separate Vorspanneinheiten,
- Fig. 5: teilweise ein Lenkgetriebe einer weiteren vorschlagsgemäßen Servolenkbaugruppe in einer Schnittansicht, grundsätzlich gemäß Schnittlinie B-B aus Fig. 3 a),
- Fig. 6: teilweise ein Lenkgetriebe einer vorschlagsgemäßen Servolenkbaugruppe in einer Schnittansicht, grundsätzlich gemäß Schnittlinie B-B aus Fig. 3 a),
- Fig. 7: eine Eingangswelle einer vorschlagsgemäßen Servolenkbaugruppe in Fig. 7 a) in einer perspektivischen Ansicht in einem montierten Zustand, in Fig. 7 b) in einer Frontansicht aus der Richtung B aus Fig. 7 a), sowie in Fig. 7 c) in einer Schnittansicht gemäß Schnitt A-A in Fig. 7 b), und
- Fig. 8: die Eingangswelle der vorschlagsgemäßen Servolenkbaugruppe aus Fig. 7 a) in einer Ansicht sämtlicher Einzelteile in einem nicht montierten Zustand.

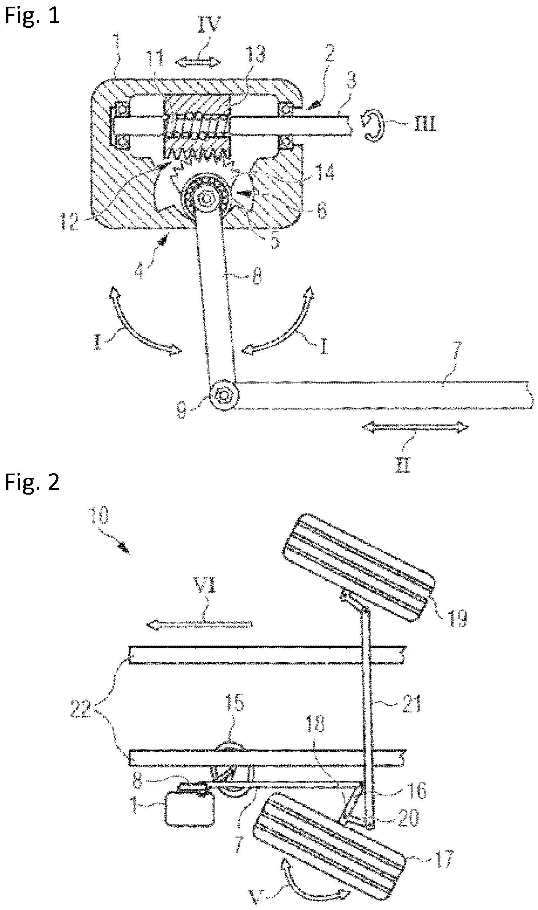

In Fig. 1 ist eine Servolenkbaugruppe für eine elektro-mechanische Servolenkung von Kraftfahrzeugen schematisch dargestellt. Die Servolenkbaugruppe weist ein Lenkgetriebe 1 auf. Über das Lenkgetriebe 1 wird eine von einem Lenkgeber, wie beispielsweise einem Lenkrad (in Fig. 1 nicht dargestellt), durch den Fahrer des Kraftfahrzeugs durchgeführte Lenkbewegung umgesetzt. Dazu wird eine über eine Eingangsseite 2 des Lenkgetriebes 1, in dem konkret dargestellten Fall über eine Eingangswelle 3, eingeleitete Drehbewegung an eine Ausgangsseite 4 des Lenkgetriebes 1 weitergeleitet.

An der Ausgangsseite 4 des Lenkgetriebes 1 wird wiederum eine Bewegung, im konkret dargestellten Fall eine Drehbewegung einer als Segmentwelle 5 ausgebildeten Ausgangswelle 6 des Lenkgetriebes 1, ausgeleitet. Diese an der Ausgangsseite 4 ausgeleitete Bewegung, welche im vorliegend dargestellten Fall die durch zwei gebogene Doppelpfeile I angedeutete Drehbewegung ist, wird letztlich in dem vorliegend dargestellten, nicht beschränkendem Ausführungsbeispiel durch eine Schubstange 7 der Servolenkbaugruppe aufgenommen. Dadurch führt die Schubstange 7 eine translatorische Schubstangenbewegung durch. Die translatorische Schubstangenbewegung der Schubstange 7 ist eine Linearbewegung, welche in Fig. 1 durch einen Doppelpfeil II gekennzeichnet ist, und führt schließlich dazu, dass wenigstens ein Rad des Kraftfahrzeugs um eine Lenkachse dreht (in Fig. 1 nicht dargestellt), sodass im Ergebnis das Kraftfahrzeug eine gewünschte Kurvenfahrt vollzieht.

Zur Umwandlung der an der Ausgangsseite 4 ausgeleiteten Drehbewegung (Doppelpfeile I) in die gewünschte translatorische Schubstangenbewegung (Doppelpfeil II) der Schubstange 7 weist die dargestellte Servolenkbaugruppe einen Lenkstockhebel 8 und ein den Lenkstockhebel 8 mit der Schubstange 7 verbindendes Gelenk in Form eines Kugelgelenks 9 auf.

Zur nachfolgenden Beschreibung eines üblichen Lenkvorgangs wird sowohl auf Fig. 1 als auch auf Fig. 2, welche eine schematische Darstellung eines Kraftfahrzeugs 10 von unten mit einer Servolenkbaugruppe mit dem Lenkgetriebe 1 aus Fig. 1 zeigt, Bezug genommen.

Für Kraftfahrzeuge 10 in Form von Nutzfahrzeugen kommen in der Regel Kugelumlauflenkgetriebe als sogenannte Kugelumlauflenkung (kurz: KUL) zum Einsatz. Die Kinematik einer solchen Anordnung ist für Nutzfahrzeuge besonders günstig, da diese meist eine Vorderachse in Form einer Starrachse aufweisen. Sind die Längslenker der Vorderachse und die Schubstange etwa gleich lang und im Wesentlichen parallel zueinander angeordnet, so bilden sie ein Parallelogramm. Dadurch wirken sich Einfederbewegungen der Vorderachse nicht oder kaum aus. Sofern das Lenkgetriebe 1 rahmenfest verbaut ist, kann ein Längenausgleich in der Lenksäule beispielsweise durch eine entsprechende Relativbewegung zwischen einem Rahmen des Kraftfahrzeugs 10 und einer Fahrerkabine erfolgen. Da es sich bei Nutzfahrzeugen um einen Anwendungsfall handelt, für den sich die vorschlagsgemäße Servolenkbaugruppe besonders eignet, wird die Erfindung nachfolgend am Beispiel einer Kugelumlauflenkung erklärt.

Das Lenkgetriebe 1 umfasst eine abschnittsweise als Spindel 11 ausgebildete Eingangswelle 3, sowie eine im Bereich der Spindel 11 angeordnete, eine Außenverzahnung 12 aufweisende Kugelumlaufmutter 13. Mit der Außenverzahnung 12 steht eine Segmentverzahnung 14 in Eingriff. Die Segmentverzahnung 14 und die Außenverzahnung 12 sind miteinander kämmend angeordnet. Die Segmentverzahnung 14 ist ferner rotatorisch fest, sprich verdrehfest, mit der Ausgangswelle 6 verbunden, die demnach als Segmentwelle 5 ausgebildet ist. Mit der Ausgangswelle 6 wiederum ist der Lenkstockhebel 8 rotatorisch fest bzw. verdrehfest verbunden, wobei der Lenkstockhebel 8 wiederum, wie bereits zuvor beschrieben, über das Kugelgelenk 9 beweglich mit der Schubstange 7 verbunden ist.

In dem Lenkgetriebe 1 wird die Drehung eines Lenkgebers, konkret eines Lenkrads 15 (Fig. 2), über die Lenksäule und die Eingangswelle 3 auf die Spindel 11 übertragen. Die Eingangswelle 3 kann beispielsweise Teil der Lenksäule sein. Die Spindel 11 wird auch Kugelumlaufspindel oder gegebenenfalls Schnecke genannt. Diese Drehbewegung der Eingangswelle 3, welche in Fig. 1 durch einen eine Kreisbewegung andeutenden Pfeil III gekennzeichnet ist, wird mittels der Kugelumlaufmutter 13 in eine Linearbewegung der Kugelumlaufmutter 13 und somit auch der Außenverzahnung 12 der Kugelumlaufmutter 13 umgesetzt. Diese Linearbewegung der Kugelumlaufmutter 13 und der Außenverzahnung 12 ist in Fig. 1 durch einen Doppelpfeil IV gekennzeichnet.

Über die Verzahnungspaarung der Außenverzahnung 12 und der Segmentverzahnung 14 wird die durch den Doppelpfeil IV gekennzeichnete Linearbewegung sodann in die bereits beschriebene, an der Ausgangsseite 4 des Lenkgetriebes 1 ausgeleitete, durch die gebogenen Doppelpfeile I gekennzeichnete Drehbewegung der Ausgangswelle 6 umgesetzt. Somit wird die Linearbewegung (Doppelpfeil IV) letztlich auch in die Drehbewegung des Lenkstockhebels 8 (Doppelpfeile I) umgesetzt. Am Ende des Lenkstockhebels 8 wird die Schubstange 7 wiederum vorwiegend linear bewegt. Durch die Schubstange 7 wird, wie aus Fig. 2 ersichtlich ist, letztendlich über einen am Radträger befestigten Lenkhebel 16 das zu lenkende Rad 17 um die Lenkachse 18 geschwenkt. Diese Drehbewegung des Rads 17 ist in Fig. 2 durch einen gebogenen Doppelpfeil V angedeutet. Dabei kann ein dem Rad 17 gegenüberliegendes weiteres Rad 19 über einen Spurhebel 20 und eine starre Spurstange 21 mitgelenkt werden.

Mit Bezug auf Fig. 1 ist ersichtlich, dass die aus der Ausgangsseite 4 ausgeleitete Drehbewegung (Doppelpfeile I) über das Kugelgelenk 9 an die Schubstange 7 derart weitergegeben wird, dass die Schubstange 7 die translatorische Schubstangenbewegung (Doppelpfeil II) zur bestimmungsgemäßen Durchführung der Lenkbewegung des Rads 17 bzw. der Räder 17, 19 vornimmt.

In Fig. 2 ist ferner ein Rahmen 22 des Kraftfahrzeugs 10 in Gestalt zweier parallel zueinander angeordneter Längsträger dargestellt. Das Lenkgetriebe 1 kann mittels einer in den Fig. 1 und 2 nicht dargestellten Befestigungsanordnung an dem Rahmen 22 des Kraftfahrzeugs 10 montiert sein, indem beispielsweise Längsträger des Rahmens 22 und Gehäuse des Lenkgetriebes 1 über Befestigungsschrauben miteinander verbunden sind. Eine Fahrtrichtung des Kraftfahrzeugs 10 ist in Fig. 2 mit einem Pfeil VI gekennzeichnet.

Das Lenkgetriebe 1 weist bevorzugt eine hydraulische Servounterstützung auf. Hierzu ist die Kugelumlaufmutter 13 gegen ein Gehäuse des Lenkgetriebes 1 abgedichtet. Die Kugelumlaufmutter 13 kann somit als sogenannter Hydraulikkolben, bzw. auch einfach Kolben genannt, fungieren. Die Kugelumlauflenkung weist entsprechend zwei auf gegenüberliegenden Seiten des Kolbens und voneinander getrennte Ölkammern zur hydraulischen Lenkunterstützung auf. Über das vom Fahrer an der Eingangswelle 3 eingebrachte Lenkmoment kann sodann etwa mittels eines Drehschieberventils ein Differenzdruck zwischen den beiden Seiten der Kugelumlaufmutter 13 aufgebaut werden. Durch den Differenzdruck kann die Bewegung der Kugelumlaufmutter 13 unterstützt werden.

Die beschriebene Servolenkbaugruppe weist zur Realisierung der gewünschten Lenkbewegung insbesondere im Lenkgetriebe 1 mehrere für mechanische Belastungen empfindliche Komponenten auf. Diese Komponenten gilt es vor allem gegenüber schlagartigen Bewegungen zu schützen, die beispielsweise daraus resultieren können, dass Erschütterungen und schließlich unerwünschte Kräfte über die Räder 17, 19 bis in das Lenkgetriebe 1 eingeleitet werden. Solche Kräfte bzw. Belastungen oder Spannungen im System können auftreten, wenn beispielsweise Fahrbahnunebenheiten zu Stößen führen, die über die Räder 17, 19 eingeleitet werden. Insofern ist es besonders erstrebenswert, solche straßenseitige Stoßimpulse zum Lenkgetriebe 1 hin zu dämpfen oder zu kompensieren und somit Beschädigungen von Komponenten des Lenkgetriebes 1 zu verhindern. Im Besonderen können solche schädlichen Stöße in dem dargestellten Ausführungsbeispiel über die Räder 17, 19 und sodann die Schubstange 7 weiter bis an das Lenkgetriebe 1 übertragen werden, wodurch Schäden an empfindlichen Komponenten des Lenkgetriebes 1 entstehen könnten.

Hier leistet die vorliegende Erfindung in vorteilhafter Weise Abhilfe. Wesentlich ist dazu zum einen, dass eine einstellbare Absorptionseinheit 23 zur Absorption von straßenseitigen, über das Rad 17, 19 des Kraftfahrzeugs 10 aufgenommenen Stößen vorgesehen ist.

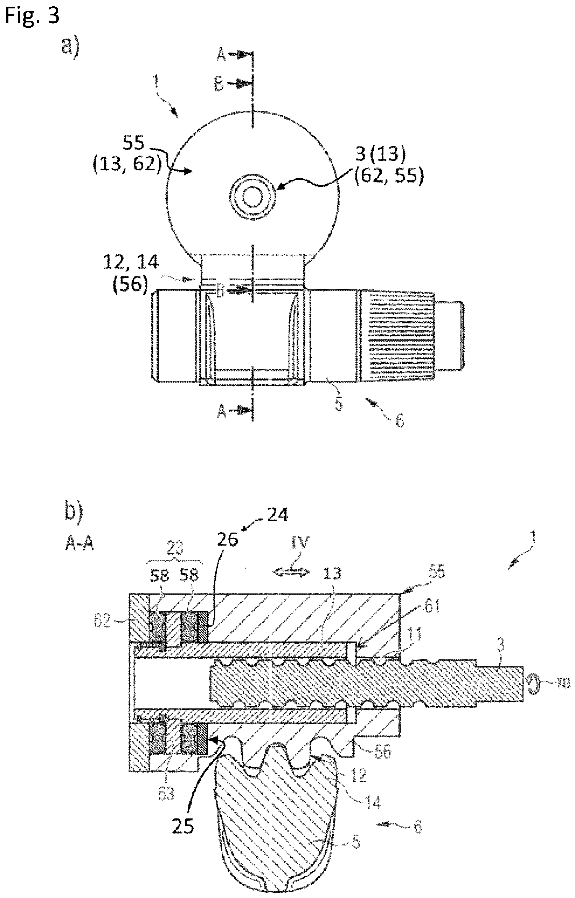

Die einstellbare Absorptionseinheit 23 kann dabei an unterschiedlichsten Stellen bzw. Knotenpunkten der Servolenkbaugruppe vorgesehen sein, wie beispielhaft in den dargestellten Ausführungsbeispielen der Fig. 3 bis 8 erkennbar ist. Die einstellbare Absorptionseinheit 23 ist dabei bevorzugt durch wenigstens ein energieabsorbierendes Element gebildet und ist zur wenigstens teilweisen Umwandlung von kinetischer in potentielle Energie eingerichtet.

Die einstellbare Absorptionseinheit 23 ist dazu bevorzugt derart in die Servolenkbaugruppe integriert, dass an die einstellbare Absorptionseinheit 23 angrenzende Komponenten der Servolenkbaugruppe zumindest minimale Bewegungen gegeneinander ausführen können. Dazu ist die einstellbare Absorptionseinheit 23 bevorzugt elastisch ausgebildet bzw. weist eine erhöhte Nachgiebigkeit im Vergleich zu den, insbesondere unmittelbar, angrenzenden Komponenten auf. Auf diese Weise können schlagartige Bewegungen von Komponenten in der Servolenkbaugruppe gezielt in der einstellbaren Absorptionseinheit 23 aufgenommen und durch diese abgefedert bzw. kompensiert werden. Die gezielt in dem Bauteil in Form der einstellbaren Absorptionseinheit 23 zugelassenen Relativbewegungen sorgen für eine gezielte Energieumwandlung und somit eine Kompensation der kinetischen Energie. Auf diese Weise wird die Gefahr von Schäden an für mechanische Belastungen empfindlichen Komponenten im Lenkgetriebe 1 erheblich reduziert.

Die Einstellbarkeit der einstellbaren Absorptionseinheit 23 wird dabei über eine separate Vorspanneinheit 24 gewährleistet. Diese separate Vorspanneinheit 24 wirkt mit der einstellbaren Absorptionseinheit 23 zusammen, wodurch eine vorbestimmte Vorspannkraft auf die einstellbare Absorptionseinheit 23 ausgeübt wird. Insbesondere dient die separate Vorspanneinheit 24 dazu, die einstellbare Absorptionseinheit 23 um ein gewisses Maß zusammen zu drücken bzw. zu komprimieren. Die einstellbare Absorptionseinheit 23 weist dadurch insbesondere im Wesentlichen in der Kraftflussrichtung der zu kompensierenden, durch die straßenseitigen Stöße eingeleiteten Kräfte ein geringeres Dickenmaß auf, wenn die separate Vorspanneinheit 24 vorhanden ist, im Vergleich zu dem Zustand, wenn keine separate Vorspanneinheit 24 vorhanden bzw. montiert ist. Dadurch wird in der einstellbaren Absorptionseinheit 23 gezielt eine Rückstellkraft hervorgerufen.

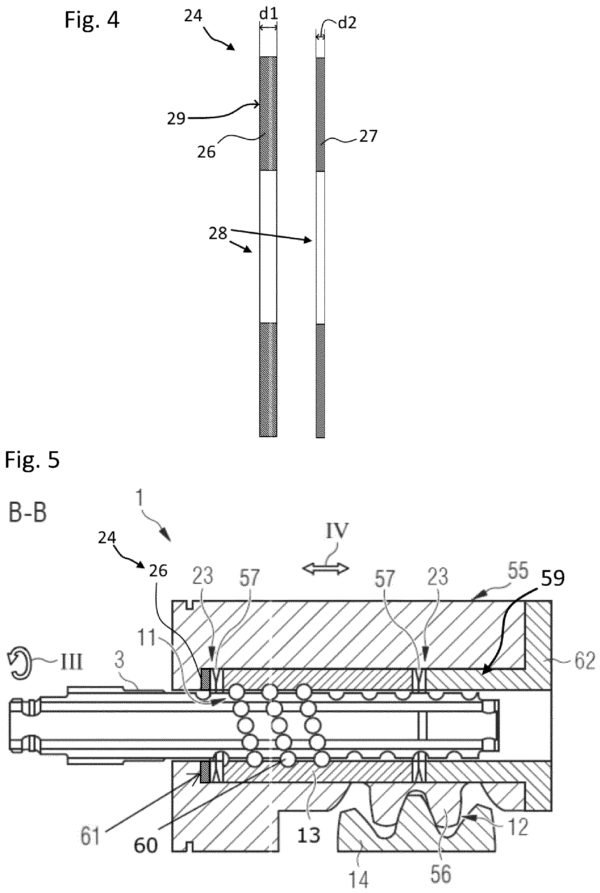

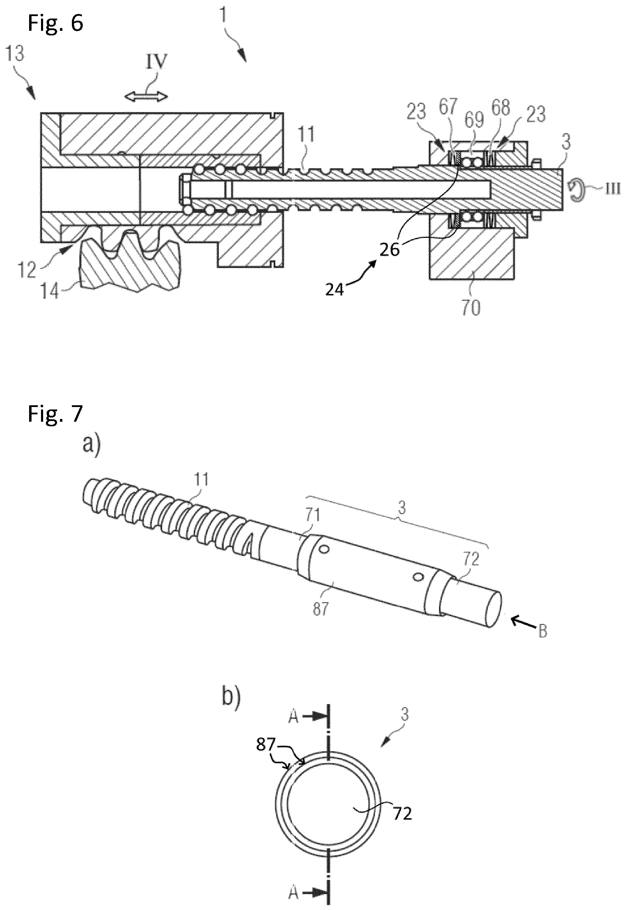

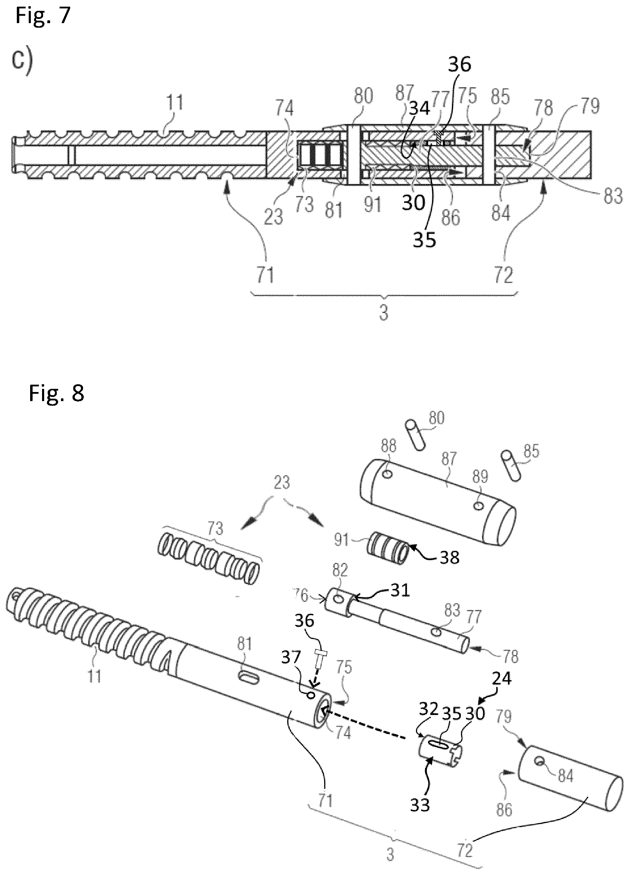

Die einstellbare Absorptionseinheit 23 zur Absorption bzw. Kompensation von straßenseitigen, über das Rad 17 des Kraftfahrzeugs 10 aufgenommenen Stößen kann an diversen Stellen der Servolenkbaugruppe vorgesehen sein. Wie anhand der nachfolgenden Ausführungsbeispiele der Fig. 3, 5, 6, 7, 8 deutlich wird, kann die einstellbare Absorptionseinheit 23 jedoch besonders wirksam in das Lenkgetriebe 1 bzw. dessen Anbindung an die Eingangswelle 3 integriert sein. Besonders bevorzugt wird die einstellbare Absorptionseinheit 23 dabei in den Aufbau der Kugelumlaufmutter 13 oder deren Interaktion mit der Eingangswelle 3 eingebunden (vgl. Fig. 3, 5), bzw. im Zuge der Lagerung der Eingangswelle 3 (vgl. Fig. 6) oder im Aufbau der Eingangswelle 3 selbst (vgl. Fig. 7, 8) vorgesehen.

In Fig. 3 a) ist das Lenkgetriebe 1 teilweise jeweils schematisch dargestellt. Fig. 3 b) zeigt die Schnittansicht A-A aus Fig. 3 a). Fig. 3 a) dient als Art schematische Übersicht (mit unterschiedlichen alternativen Bezugszeichen in Klammern versehen), denn auch Fig. 5 sowie Fig. 6 zeigen grundsätzlich die Schnittansicht B-B aus Fig. 3 a).

Fig. 3 b) zeigt, ebenso wie das Ausführungsbeispiel gemäß Fig. 5, das Lenkgetriebe 1 der entsprechenden vorschlagsgemäßen Servolenkbaugruppen teilweise. Dabei weist in beiden Ausführungsbeispielen jeweils das Lenkgetriebe 1 eine als Spindel 11 ausgebildete Eingangswelle 3 auf, sowie ferner eine Kugelumlaufmutter 13 und auch eine Zahnstange 55 zur Umsetzung der Drehbewegung der Eingangswelle 3 (Pfeil III) in eine translatorische Bewegung (Doppelpfeil IV).

Zur Weitergabe dieser translatorischen Bewegung (Doppelpfeil IV) wiederum weist die Zahnstange 55 außenseitig einen Verzahnungsabschnitt 56 auf, welcher die Außenverzahnung 12 bereitstellt. Der Verzahnungsabschnitt 56 bzw. die Außenverzahnung 12 steht sodann mit der die Ausgangsseite 4 des Lenkgetriebes 1 wenigstens teilweise bildenden Segmentwelle 5 in Eingriff und ruft durch seine translatorische Bewegung (Doppelpfeil IV) wiederum die erwünschte Rotationsbewegung der Segmentwelle 5 (vgl. Doppelpfeile I in Fig. 1) hervor. Weiterhin bildet die Zahnstange 55 ein separates Bauteil zu der innenliegenden Kugelumlaufmutter 13 aus.

Zur Kompensation straßenseitiger Stöße ist die einstellbare Absorptionseinheit 23 der in den Fig. 3 b) und 5 dargestellten Servolenkbaugruppen derart angeordnet, dass die translatorische Bewegung der Kugelumlaufmutter 13 (Doppelpfeil IV) über die einstellbare Absorptionseinheit 23 auf den Verzahnungsabschnitt 56 übertragen wird und umgekehrt, sprich auch eine translatorische Bewegung des Verzahnungsabschnitts 56 wird über die einstellbare Absorptionseinheit 23 auf die Kugelumlaufmutter 13 übertragen. Dabei ist die einstellbare Absorptionseinheit 23 aus wenigstens einem elastischem Element, und zwar bei der Ausführungsvariante gemäß Fig. 5 aus zwei Tellerfedern 57, bzw. bei der Ausführungsvariante gemäß Fig. 3 b) aus zwei Elastomeren 58 gebildet. Es sind grundsätzlich auch Kombinationen aus Elastomeren, Tellerfedern oder auch Spiralfedern möglich.

Die einstellbare Absorptionseinheit 23 bildet letztlich eine Verknüpfungsstelle zwischen der jeweiligen Kugelumlaufmutter 13 und dem Verzahnungsabschnitt 56, welcher die Funktion der Außenverzahnung 12 für die Verzahnungspaarung mit der Segmentwelle 6 übernimmt.

In der Richtung entsprechend der translatorischen Bewegung der Kugelumlaufmutter 13 (Doppelpfeil IV) sind die beiden Komponenten Kugelumlaufmutter 13 und Zahnstange 55 mit Verzahnungsabschnitt 56 grundsätzlich relativ zueinander beweglich eingerichtet. In Rotationsrichtung wiederum, also grundsätzlich entsprechend der Drehbewegung der Eingangswelle 3 (Pfeil III), sind die beiden Komponenten Kugelumlaufmutter 13 und Zahnstange 55 mit Verzahnungsabschnitt 56 verdrehfest zueinander gesichert. Die Kugelumlaufmutter 13 kann sich also nicht in ihrer Aufnahme der Zahnstange 55 rotatorisch verdrehen. Hierzu können beispielsweise Passfedern zur Sicherung vorgesehen sein. In Fig. 5 sind zusätzlich die Kugeln 60 der Kugelumlauflenkung dargestellt, während in Fig. 3 b) auf die explizite Darstellung dieser verzichtet wurde.

Die aus wenigstens einem elastischem Element gebildete einstellbare Absorptionseinheit 23 lässt in den dargestellten Ausführungsbeispielen jeweils Relativbewegungen der an die einstellbare Absorptionseinheit 23 angrenzenden Komponenten zu. Diese Relativbewegungen sind in axialer Richtung möglich. Dabei erfährt die einstellbare Absorptionseinheit 23 jeweils eine elastische Komprimierung. Auf diese Weise wandelt die einstellbare Absorptionseinheit 23 bestimmungsgemäß bei zu starken bzw. schlagartigen Bewegungen, zum Beispiel bei schlagartigem Verdrehen der Ausgangswelle 6, welche schlagartigen Bewegungen etwa durch straßenseitige Stöße verursacht werden können, kinetische Energie in potentielle Energie um. Dadurch können die im Inneren des Lenkgetriebes 1 herrschenden und durch die straßenseitigen Stöße hervorgerufenen Belastungen vorteilhaft kompensiert werden.

Die Kugelumlaufmutter 13 ist in den beiden dargestellten Ausführungsbeispielen der Fig. 3 b) und 5 in einer zentralen, eine Planfläche 61 aufweisenden Bohrung der Zahnstange 55 aufgenommen und auf der gegenüberliegenden Seite der Planfläche 61 mit einem Deckel 62 gesichert. Der Deckel 62 schlägt hierzu mit seiner kopfseitigen, umlaufenden Auflagefläche jeweils an dem stirnseitigen Ende der Zahnstange 55 an, welches stirnseitige Ende der Planfläche 61 der zentralen Bohrung gegenüberliegend angeordnet ist.

Die Deckel 62 sind jeweils fest mit der Zahnstange 55 verbunden, bevorzugt jeweils über die stirnseitigen, den Planflächen 61 abgewandten Enden der Zahnstange 55. Ferner weist der Deckel 62 gemäß Ausführungsbeispiel in Fig. 5 einen sich axial erstreckenden Einfuhrabschnitt 59 auf, der in die zentrale Bohrung der Zahnstange 55 hineinragt.

In dem Ausführungsbeispiel gemäß Fig. 3 b) liegt das links dargestellte Elastomer 58 mit seiner linken, außenseitigen Stirnfläche gegen einen inneren Teil der kopfseitigen, umlaufenden Auflagefläche des Deckels 62 an. In dem Ausführungsbeispiel gemäß Fig. 5 wiederum liegt die rechts dargestellte Tellerfeder 57 mit seiner rechten, außenseitigen Fläche gegen einen innere Stirnfläche des Einfuhrabschnitts 59 des Deckels 62 an.

Nachfolgend wird der Kompensationseffekt der straßenseitig hervorgerufenen, schlagartigen Bewegungen durch die einstellbaren Absorptionseinheiten 23 der beiden beschriebenen Ausführungsbeispiele der Fig. 3 b) und 5 beschrieben. Konkret geht es dabei vor allem um die Situationen, dass schlagartige Bewegungen der Ausgangswelle 6 auftreten, die zu ruckartigen Linearbewegungen der Zahnstange 55, welche über die Verzahnungspaarung mit der Ausgangswelle 6 in Eingriff steht (vgl. Bezugszeichen 12, 14, 56), entsprechend der beiden durch den Doppelpfeil IV gekennzeichneten Richtungen führen können.

Grundsätzlich verhält es sich in den beiden Ausführungsbeispielen der Fig. 3 b) und 5 wie folgt: Schlagartiges Verdrehen der Segmentwelle 5 und somit schlagartige lineare Bewegungen der Zahnstange 55 nach links werden in dem in Fig. 3 b) dargestellten Ausführungsbeispiel zunächst durch das rechts dargestellte Elastomer 58 kompensiert, sowie in dem in Fig. 5 dargestellten Ausführungsbeispiel zunächst durch die rechts dargestellte Tellerfeder 57 kompensiert. Gleiches gilt analog für schlagartige lineare Bewegungen der jeweiligen Kugelumlaufmuttern 13 nach rechts, was zu einer Kompression des rechten Elastomers 58 bzw. der rechten Tellerfeder 57 führt.

Umgekehrt gilt für die entgegengesetzten Bewegungsrichtungen: Bei schlagartigen Bewegungen der jeweiligen Kugelumlaufmutter 13 nach links werden das linke Elastomer 58 bzw. die linke Tellerfedern 57 komprimiert, wodurch jeweils gezielt die gewünschte Kompensation erreicht wird. Analog gilt für ein ruckartiges Auslenken der Ausgangswelle 6 und somit der Segmentverzahnung 14 nach rechts: Durch die schlagartigen linearen Bewegungen der jeweiligen Zahnstangen 55 nach rechts werden das linke Elastomer 58 bzw. die linke Tellerfedern 57 komprimiert, wodurch jeweils gezielt die gewünschte Kompensation erreicht wird.

Im Einzelnen läuft die gezielte Kompensation ruckartiger Bewegungen gemäß Ausführungsbeispiel der Fig. 3 b) wie folgt ab: Bewegt sich etwa die Zahnstange 55 schlagartig nach links, beispielsweise provoziert durch ein plötzliches Verschwenken der Segmentwelle 5 nach links, so führt das dazu, dass zunächst das rechte Elastomer 58 komprimiert wird. Dieses rechte Elastomer 58 ist in einer zentralen Aufnahme 25 der Zahnstange 55 aufgenommen, wobei am Grund dieser zentralen Aufnahme 25 zunächst eine (später näher beschriebene) Ausgleichsscheibe einer Vorspanneinheit 24 angeordnet ist, an welche angrenzend wiederum das rechte Elastomer 58 anliegt. Jedenfalls wird von der Zahnstange 55 über den Grund der zentralen Aufnahme 25 und die Vorspanneinheit 24 die ruckartige Bewegung nach links an das rechte Elastomer 58 und sodann über ein angrenzendes Ringelement 63 an die Kugelumlaufmutter 13 übertragen.

Die hiermit beschriebene Kompensation der plötzlichen Bewegung der Zahnstange 55 in die linke Richtung funktioniert analog ebenso in die entgegengesetzte Richtung bezogen auf den Kraftfluss, sprich wenn Ursache der ruckartigen Bewegung nicht wie zuvor beschrieben das Auslenken der Ausgangswelle 6 und somit der Segmentverzahnung 14 nach links, sondern vielmehr eine ruckartige Bewegung der Kugelumlaufmutter 13 nach rechts ist. Denn dann komprimiert die sich schlagartig nach rechts bewegende Kugelumlaufmutter 13 durch die Bewegungsweiterleitung über das Ringelement 63 zunächst das rechte Elastomer 58, ehe dieses wiederum die Bewegung wie gewünscht kompensiert an die Vorspanneinheit 24 bzw. schließlich an die Zahnstange 55 weitergibt und letztlich an die Segmentverzahnung 14 und die Ausgangswelle 6 überträgt.

In der entgegengesetzten Richtung wiederum, also bei einer schlagartigen Bewegung der Zahnstange 55 nach rechts (beispielsweise hervorgerufen durch dein ruckartiges Auslenken der Segmentwelle 5 nach rechts), wird zunächst der am linken Rand in Fig. 3 b) dargestellte Deckel 62 nach rechts bewegt, da dieser fest mit der Zahnstange 55 verbunden ist. Hierdurch wird zunächst das angrenzende linke Elastomer 58 komprimiert, ehe die Bewegung über das Ringelement 63 an die Kugelumlaufmutter 13 weitergegeben wird.

Diese beschriebene Kompensation funktioniert ebenso in die umgekehrte Richtung bezogen auf den Kraftfluss, sprich wenn der Ausgangspunkt nicht eine schlagartige Bewegung der Zahnstange 55 nach rechts, sondern eine ruckartige Bewegung der Kugelumlaufmutter 13 nach links ist. Denn dann wird zunächst durch die Bewegung der Kugelumlaufmutter 13 nach links mittels des Ringelements 63 das angrenzende linke Elastomer 58 komprimiert, wodurch die gewünschte Kompensation erzielt wird, ehe die Kräfte und die Bewegung an den Deckel 62 und somit an die Zahnstange 55 und die Ausgangswelle 6 weitergegeben werden.

Gemäß Ausführungsbeispiel der Fig. 5 läuft die gezielte Kompensation ruckartiger Bewegungen wie folgt ab: Bewegt sich etwa die Zahnstange 55 schlagartig linear nach links, beispielsweise aufgrund eines plötzlichen Auslenkens der Segmentwelle 5 nach links, so wird zunächst die rechte Tellerfeder 57 komprimiert. Dies geschieht dadurch, dass gemeinsam mit der Zahnstange 55 der mit dieser fest verbundene Deckel 62 mitsamt seinem Einfuhrabschnitt 59 ebenfalls nach links bewegt wird. Dadurch wird sodann wiederum zunächst die rechte Tellerfeder 57 komprimiert, was zu der gewünschten Kompensation des straßenseitigen Stoßes führt, ehe schließlich die Bewegung an die links an die rechte Tellerfeder 57 anschließende Kugelumlaufmutter 13 weitergegeben wird.

Die hiermit beschriebene Kompensation der plötzlichen Bewegung der Zahnstange 55 in die linke Richtung funktioniert analog ebenso in die entgegengesetzte Richtung bezogen auf den Kraftfluss, sprich wenn Ursache der ruckartigen Bewegung nicht wie zuvor beschrieben das Auslenken der Ausgangswelle 6 und somit der Segmentverzahnung 14 nach links, sondern vielmehr eine ruckartige Bewegung der Kugelumlaufmutter 13 nach rechts ist. Denn dann komprimiert die sich schlagartig nach rechts bewegende Kugelumlaufmutter 13 zunächst die rechte Tellerfeder 57, ehe diese wiederum die Bewegung sodann kompensiert an den Deckel 62 weitergibt und dieser die Bewegung an die Zahnstange 55 und schließlich an die Segmentverzahnung 14 überträgt.

In die entgegengesetzte Richtung wiederum, also wenn die Zahnstange 55 gemäß Fig. 5 eine plötzliche Bewegung nach rechts ausführt, wird zunächst die im Bereich der Planfläche 61 vorgesehene, linke Tellerfeder 57 komprimiert, ehe die entsprechenden Belastungen an die Kugelumlaufmutter 13 weiteregegeben werden. Ebenso führt eine plötzliche, ruckartige Bewegung der Kugelumlaufmutter 13 nach links dazu, dass zunächst die linke Tellerfeder 57 komprimiert wird, ehe schließlich über die Planfläche 61 die Kräfte und somit die Bewegung an die Zahnstange 55 weitergegeben und letztlich ein Auslenken der Segmentverzahnung 14 und dadurch der Ausgangswelle 6 nach links hervorgerufen wird.

Ein besonderer Vorteil der vorschlagsgemäßen Servolenkbaugruppe ist, dass eine separate Vorspanneinheit 24 vorgesehen ist, die mit der einstellbaren Absorptionseinheit 23 zusammenwirkt. Es wird eine gewünschte, vorbestimmte Vorspannkraft von dieser separaten Vorspanneinheit 24 auf die einstellbare Absorptionseinheit 23 ausgeübt.

In den dargestellten Ausführungsbeispielen gemäß Fig. 3 b) und Fig. 5 wird konkret jeweils eine erste Ausgleichsscheibe 26 als separate Vorspanneinheit 24 eingesetzt. Fig. 4 stellt eine solche erste Ausgleichsscheibe 26 grundsätzlich, wobei die erste Ausgleichsscheibe 26 eine erste Dicke d1 aufweist. Ferner ist eine weitere, zweite Ausgleichsscheibe 27 einer abweichenden, hier geringeren, Dicke d2 dargestellt. Jeweils zentral weisen die Ausgleichsscheiben 26, 27 Öffnungen 28 auf, durch welche sich im montierten Zustand die Kugelumlaufmutter 13 sowie Eingangswelle 3 (vgl. Fig. 3 b)), bzw. lediglich die Eingangswelle 3 (vgl. Fig. 5) erstrecken können.

Grundsätzlich können auch mehrere Ausgleichsscheiben 26, 27 und nicht nur, wie in Fig. 3 b) und Fig. 5 lediglich beispielhaft dargestellt, eine erste Ausgleichsscheibe 26 als separate Vorspanneinheit 24 vorgesehen sein, insbesondere um gezielt die gewünschte auf die einstellbaren Absorptionseinheiten 23 zu wirkenden Vorspannkräfte einzustellen.

Konkret weisen die separaten Vorspanneinheiten 24, in den beschriebenen Ausführungen die jeweiligen ersten Ausgleichsscheiben 25, jeweils eine Stirnfläche 29 auf, die als Kontaktfläche mit der einstellbaren Absorptionseinheit 23 zu eben jener Einstellung, sprich Vorspannung, der Absorptionseinheit 23 dient. Die ersten Ausgleichsscheiben 25 und die jeweilige einstellbare Absorptionseinheit 23 sind über eine Kontaktfläche aneinander anliegend angeordnet.

Konkret ist in Fig. 3 b) die erste Ausgleichsscheibe 26 in der zentralen Aufnahme 25 der Zahnstange 55 aufgenommen. An der dem Grund der zentralen Aufnahme 25 abgewandte Seite anschließend ist wiederum das rechte Elastomer 58 der einstellbaren Absorptionseinheit 23 angeordnet. Das rechte Elastomer 58 steht über seine rechte stirnseitige Außenfläche mit der Stirnfläche 29 der ersten Ausgleichsscheibe 26 der separaten Vorspanneinheit 24 (vgl. Fig. 4) in Kontakt.

Die separate Vorspanneinheit 24 mit der ersten Ausgleichsscheibe 26 sorgt auf diese Weise für eine Komprimierung der einstellbaren Absorptionseinheit 23 bzw. konkret des rechten Elastomers 58, im Vergleich dazu, wenn die erste Ausgleichsscheibe 26 nicht vorgesehen wäre. Es wird also eine vorbestimmte Vorspannkraft auf die einstellbare Absorptionseinheit 23 ausgeübt, was wiederum eine Rückstellkraft in dieser einstellbaren Absorptionseinheit 23 hervorruft.

Es kann also eine Servolenkbaugruppe vorteilhaft eingerichtet werden, mithilfe des vorschlagsgemäßen Verfahrens zum Einrichten einer Servolenkbaugruppe für eine elektro-mechanische Servolenkung von Kraftfahrzeugen 10, wobei es sich vor allem um eine vorbeschriebene Servolenkbaugruppe handeln kann, indem zunächst die einstellbare Absorptionseinheit 23 zur wenigstens teilweisen Absorption von straßenseitigen, über das Rad 17 bzw. 19 des Kraftfahrzeugs 10 aufgenommenen Stößen in den Umwandlungsstrang der Lenkbewegung der gesamten Servolenkbaugruppe integriert wird.

Sodann wird vorschlagsgemäß eine separate Vorspanneinheit 24 vorgesehen. Dabei kann als separate Vorspanneinheit 24, wie in den Ausführungsbeispielen der Fig. 3, 5 und 6, wenigstens eine erste Ausgleichsscheibe 26 an die einstellbare Absorptionseinheit 23 angrenzend zur Vorspannung durch gezielte Kompression der einstellbaren Absorptionseinheit 23 vorgesehen werden. Ferner ist es auch denkbar, eine zweite Ausgleichsscheibe 27 an die einstellbare Absorptionseinheit 23 angrenzend zur Vorspannung durch gezielte Kompression der einstellbaren Absorptionseinheit 23 vorzusehen (vgl. Fig. 4). Dabei kann vorteilhaft die zweite Ausgleichsscheibe 27 eine zweiten Dicke d2 aufweisen, die von einer ersten Dicke d1 der ersten Ausgleichsscheibe 26 abweicht.

Mithilfe solcher separater Vorspanneinheiten 24 wird grundsätzlich gemäß vorschlagsgemäßen Verfahren schließlich eine individuell gewünschte, vorbestimmte Vorspannkraft eingestellt, die auf die einstellbare Absorptionseinheit 23 ausgeübt wird, indem die separate Vorspanneinheit 24 die einstellbaren Absorptionseinheit 23 komprimiert. Dabei wird die einstellbare Absorptionseinheit 23 und ein gewisses, vorbestimmtes Maß komprimiert. Dieses Maß kann zum Beispiel, wie in den Ausführungsbeispielen der Fig. 3, 5 und 6 über die Dicke der gewählten Ausgleichsscheiben 26, 27 gewählt werden, etwa über die erste Dicke d1 der ersten Ausgleichsscheibe 26 (vgl. Fig. 4). Es kann der Kompressionsgrad und somit auch die Vorspannkraft auch über den Verfahrensschritt des Eindrehens beispielsweise einer Vorspannmutter 30 eingestellt werden, wodurch eine im Wesentlichen stufenlose Einstellbarkeit gewährleistet wird (vgl. Fig. 7 und 8 und die entsprechende Beschreibung).

In den Fig. 6, 7 und 8 sind weitere Ausführungsformen einer einstellbaren Absorptionseinheit 23 der vorschlagsgemäßen Servolenkbaugruppe dargestellt. In den dargestellten Ausführungsbeispielen weist das Lenkgetriebe 1 eine als Spindel 11 ausgebildete Eingangswelle 3 und eine Kugelumlaufmutter 13 zur Umsetzung der Drehbewegung der Eingangswelle 3 (Pfeil III) in eine translatorische Bewegung (Doppelpfeil IV) auf. Dabei ist die einstellbare Absorptionseinheit 23 wenigstens teilweise als axiale elastische Spindellagerung der Eingangswelle 3 gebildet.

Im Ausführungsbeispiel gemäß Fig. 6 ist die als axiale elastische Spindellagerung der Eingangswelle 3 gebildete, einstellbare Absorptionseinheit 23 durch zwei elastische Elemente, konkret durch die Tellerfeder 67 sowie die Tellerfeder 68, gebildet. Dabei sind die Tellerfedern 67 und 68 an eine Lageranordnung der Eingangswelle 3 zur drehbaren Lagerung der Eingangswelle 3, konkret an das zweireihige Schrägkugellager 69, in einem Gehäuse 70 derart angrenzend angeordnet ist, dass die Lageranordnung der Eingangswelle 3 über die Tellerfedern axial elastisch im Gehäuse 70 aufgenommen ist. Zwischen der linken Tellerfeder 67 und dem Schrägkugellager 69 ist die separate Vorspanneinheit 24 mit einer ersten Ausgleichsscheibe 26 angeordnet.

Mithilfe der dargestellten einstellbaren Absorptionseinheit 23 in Form der beiden Tellerfedern 67, 68 können gezielt straßenseitige Stöße, die beispielsweise über die Segmentwelle 6 mit der Segmentverzahnung 14 eingeleitet werden können, kompensiert werden. So drehen sich mit der Eingangswelle 3 (Pfeil III) eine die Eingangswelle 3 umschließende Hülse sowie der Innenring des Schrägkugellagers 69. Der Außenring des Schrägkugellagers 69 wiederum ist im Gehäuse 70 des Lenkgetriebes rotationsfest jedoch axial verschiebbar angeordnet.

Die einstellbare Absorptionseinheit 23 in Form der Tellerfedern 67, 68 wiederum liegen beidseitig, also die Tellerfeder 67 links und die Tellerfeder 68 rechts, an dem Außenring des Schrägkugellagers 69 an. Dabei liegt die linke Tellerfeder 67 jedoch nicht direkt, sondern nur mittelbar an dem Außenring des Schrägkugellagers 69 an. So ist zwischen Tellerfeder 67 und Außenring des Schrägkugellagers 69 noch die erste Ausgleichsscheibe 26 angeordnet.

Vorschlagsgemäß findet bei spindelseitigen Stößen eine axiale gedämpfte Bewegung statt, da die links dargestellte Tellerfeder 67 bei einer schlagartigen Bewegung der Eingangswelle 3 nach links sowie die rechts dargestellte Tellerfeder 68 bei einer schlagartigen Bewegung der Eingangswelle 3 nach rechts komprimiert werden. Der Innendurchmesser der Tellerfedern 67, 68 ist größer als der Durchmesser der Hülse bzw. der Eingangswelle 3. Durch die dargestellte einstellbare Absorptionseinheit 23 werden demnach erneut gezielt kleine Relativbewegungen der angrenzenden Komponenten der Servolenkbaugruppe zugelassen, welche wiederum zu einer gezielten Umwandlung von kinetischer in potentielle Energie und somit auch für eine Kompensation straßenseitiger Stöße sorgen. Die separate Vorspanneinheit 24 mit der ersten Ausgleichsscheibe 26 sorgt dabei wiederum für eine gezielte Vorspannung der hier links dargestellten Tellerfeder 67.

Im Ausführungsbeispiel gemäß der Fig. 7 und 8 ist die als Spindel 11 ausgebildete Eingangswelle 3 mehrteilig durch zumindest einen der Kugelumlaufmutter 13 zugewandten Spindelabschnitt 71 und einen Eingangsabschnitt 72 ausgebildet. In Fig. 7 a) ist die Eingangswelle 3 in montierten Zustand in einer perspektivischen Ansicht dargestellt, während Fig. 7 b) die entsprechende Eingangswelle 3 in einer Frontansicht gemäß Pfeil B aus Fig. 7 a) zeigt. In Fig. 7 c) ist die Eingangswelle 3 sodann in einem Längsschnitt entsprechend des Schnittes A-A aus Fig. 7 b) dargestellt. Fig. 8 wiederum zeigt dieselbe Eingangswelle 3, jedoch in einem nicht montierten Zustand, sprich zur Veranschaulichung in einzelne Komponenten zerlegt.

Der Spindelabschnitt 71 und der Eingangsabschnitt 72 der Eingangswelle 3 sind rotatorisch fest miteinander verbunden. Jedoch sind der Spindelabschnitt 71 und der Eingangsabschnitt 72 auch über die als axiale elastische Spindellagerung der Eingangswelle 3 gebildete, einstellbare Absorptionseinheit 23 axial elastisch miteinander verbunden. Dabei ist die axiale elastische Spindellagerung durch elastische Elemente gebildet, und zwar im vorliegenden Fall zum einen durch ein links dargestelltes Paket an Ringfedern 73, sowie zum anderen durch das rechte Paket an Ringfedern 91.

Die links dargestellten Ringfedern 73 sind dazu zwischen dem Spindelabschnitt 71 und dem Eingangsabschnitt 72 angeordnet. Konkret sind die links dargestellten Ringfedern 73 in einer zentralen Aufnahme 74 am dem Eingangsabschnitt 72 zugewandten Ende 75 des Spindelabschnitts 71 aufgenommen. Auf der dem Grund der Aufnahme 74 abgewandten Seite liegen die Ringfedern 73 an einer Stirnfläche 76 einer Verbindungsschubstange 77 an. Diese Verbindungsschubstange 77 ist ebenfalls zu einem großen Teil in der Aufnahme 74 des Spindelabschnitts 71 aufgenommen, jedoch ragt das dem Eingangsabschnitt 72 der Eingangswelle 3 zugewandte Ende 78 der Verbindungsschubstange 77 aus der Aufnahme 74 und somit dem Ende 75 des Spindelabschnitts 71 heraus.

Die Verbindungsschubstange 77 sorgt für die verdrehfeste Verbindung des Spindelabschnitts 71 mit dem Eingangsabschnitt 72 der Eingangswelle 3. Die Verbindungsschubstange 77 ist dazu, wie beschrieben, jeweils in die Aufnahme 74 des Spindelabschnitts 71 und eine Aufnahme 79 des Eingangsabschnitts 72 aufgenommen und mit der jeweiligen Komponente rotatorisch fest miteinander verbunden. Dazu ist zum einen ein spindelseitiger Verbindungsstift 80 vorgesehen, welcher sich im montierten Zustand sowohl durch ein Langloch 81 in dem Spindelabschnitt 71 als auch durch eine spindelseitige Durchgangsbohrung 82 in der Verbindungsschubstange 77 erstreckt (die Durchgangsbohrung 82 ist der Übersicht halber nur in Fig. 8 gekennzeichnet). Das Langloch 81 ist dazu ebenfalls als Durchgangsbohrung ausgebildet. Das Langloch 81 und die spindelseitige Durchgangsbohrung 82 sind dazu im montierten Zustand in Übereinstimmung miteinander gebracht. Das Langloch 81 weist eine größere, auf die Achse der Eingangswelle 3 bezogen axiale Erstreckung auf als die spindelseitige Durchgangsbohrung 82.

Auf der dem Eingangsabschnitt 72 zugewandten Seite weist die Verbindungsschubstange 77 wiederum eine eingangsseitige Durchgangsbohrung 83 auf (die Durchgangsbohrung 83 ist der Übersicht halber nur in Fig. 8 gekennzeichnet). Außerdem weist auch der Eingangsabschnitt 72 der Eingangswelle 3 eine Durchgangsbohrung 84 auf, welche im montierten Zustand mit der eingangsseitigen Durchgangsbohrung 83 in Übereinstimmung gebracht ist. Ein eingangsseitiger Verbindungsstift 85 wiederum erstreckt sich im montierten Zustand sowohl durch die Durchgangsbohrung 84 als auch durch die eingangsseitige Durchgangsbohrung 83, sodass Eingangsabschnitt 72 und Verbindungsschubstange 77 rotatorisch fest miteinander verbunden sind. Ferner sind der Eingangsabschnitt 72 und die Verbindungsschubstange 77 auch axial fest miteinander verbunden, da sowohl die Durchgangsbohrung 84 als auch die eingangsseitige Durchgangsbohrung 83 im Wesentlichen den gleichen Durchmesser aufweisen und der eingangsseitige Verbindungsstift 85 wiederum die beiden Komponenten auch in axialer Richtung gesehen formschlüssig miteinander verbindet.

Durch die beschriebene Anordnung sind der Eingangsabschnitt 72 und der Spindelabschnitt 71 mittels der Komponenten spindelseitiger Verbindungsstift 80, eingangsseitiger Verbindungsstift 85 sowie Verbindungsschubstange 77 rotatorisch fest miteinander verbunden. Dabei ist zwischen den beiden zugewandten Enden der beiden Komponenten, sprich zwischen dem dem Eingangsabschnitt 72 zugewandten Ende 75 des Spindelabschnitts 71 sowie dem dem Spindelabschnitt 71 zugewandten Ende 86 des Eingangsabschnitts 72, ein ausreichender Bewegungsspielraum für kleinere axiale Relativbewegungen zwischen Spindelabschnitt 71 und Eingangsabschnitt 72 vorhanden. Auch dadurch, dass der spindelseitige Verbindungsstift 80 mit axialem Spielraum in das Langloch 81 des Spindelabschnitts 71 aufgenommen ist, kann sich die Verbindungsschubstange 77 somit axial relativ zum Spindelabschnitt 71 bewegen.

Solche kleinen axialen Relativbewegung werden bestimmungsgemäß dazu ausgenutzt, dass straßenseitige Stoßimpulse gedämpft bzw. kompensiert werden können. Dazu dient letztlich die einstellbare Absorptionseinheit 23 in Form der links dargestellten Ringfedern 73, die an die Stirnfläche 76 der Verbindungsschubstange 77 anschlagend in der Aufnahme 74 des Spindelabschnitts 71 angeordnet sind, sowie in Form des rechten Pakets an Ringfedern 91. Durch die Relativbewegungen, die durch die einstellbare Absorptionseinheit 23 aufgenommen werden, wird bestimmungsgemäß kinetische in potentielle Energie umgewandelt und werden folglich die straßenseitigen Stöße kompensiert.

Ferner ist vorschlagsgemäß die Vorspannmutter 30 als separate Vorspanneinheit 24 vorgesehen. Die Vorspannmutter 30 umgibt die Verbindungsschubstange 77 teilweise außenseitig. Die Ringfedern 91 des rechts dargestellten Pakets an Ringfedern 91 sind in axialer Richtung gesehen an die Vorspannmutter 30 anschließend angeordnet. Konkret sind die rechts dargestellten Ringfedern 91 ebenfalls die Verbindungsschubstange 77 umgebend angeordnet. Dabei sind die Ringfedern 91 linksseitig, also in die dem Spindelabschnitt 71 gerichtete Richtung, an einer axialen Schubstangenanlage 31 anliegend angeordnet. Rechtsseitig wiederum, also in die dem Eingangsabschnitt 72 gerichtete Richtung, sind die Ringfedern 91 an einer axialen Stirnfläche 32 der Vorspannmutter 30 anliegend angeordnet. Diese axiale Stirnfläche 32 der Vorspannmutter 30 bildet also die Kontaktfläche zwischen den Ringfedern 91 der einstellbaren Absorptionseinheit 23 und der separaten Vorspanneinheit 24 aus.

Teil der separaten Vorspanneinheit 24 sind in dem in Fig. 7 und 8 dargestellten Ausführungsbeispiel zwei ineinandergreife Gewinde. So weist zum einen die Vorspannmutter 30 auf ihrer außenseitigen Mantelfläche ein Gewinde 33 auf (der Übersichtlichkeit halber nur in Fig. 8 mit einem Pfeil angedeutet). Zum anderen weist der teilweise innen hohl ausgebildete Spindelabschnitt 71 der Eingangswelle 3 wiederum ein zu dem Gewinde 33 passende Gegengewindes 34 auf. Auf diese Weise stehenden die Vorspannmutter 30 als erste Komponente und der Spindelabschnitt 71 der Eingangswelle 3 als zweite Komponente miteinander in Eingriff. Dadurch ist die separate Vorspanneinheit 24 derart mit der einstellbaren Absorptionseinheit 23 zusammenwirkend eingerichtet, dass die vorbestimmte Vorspannkraft mittels der beiden über das Gewinde 33 und das Gegengewinde 34 miteinander in Eingriff stehenden Komponenten in Form der Vorspannmutter 30 und des Spindelabschnitts 71 einstellbar ist. Dabei sind die beiden Komponenten vorliegend im Wesentlichen stufenlos einstellbar. Dadurch kann die Vorspannmutter 30 ihre axiale Lage gegenüber dem Spindelabschnitt 71 der Eingangswelle 3 zumindest in einem gewissen Bereich beliebig ändern.

In Abhängigkeit davon, wie weit die Vorspannmutter 30 in die Aufnahme 74 des Spindelabschnitts 71 hineingebracht (in Fig. 8 durch den gestrichelten Pfeil angedeutet) und schließlich in das Gegengewinde 33 gedreht wird, wird das rechte Paket an Ringfedern 91 mehr oder weniger stark komprimiert.

Damit die Vorspannmutter 30 gegen ein erneutes Verdrehen des Gewindes 33 in dem Gegengewinde 34 gesichert ist, kann, wie vorliegend dargestellt, eine Verdrehsicherung vorgesehen sein. Hierzu weist in dem in Fig. 7 und 8 dargestellten Ausführungsbeispiel die Vorspannmutter eine Nut 35 auf. Es können auch mehrere Nuten an verschiedenen Stellen in der Mantelfläche der Vorspannmutter 30 vorgesehen sein. Zur Verdrehsicherung ist im montierten Zustand ein Sicherungsbolzen 36 vorgesehen, der sowohl in die Nut 35 der Vorspannmutter 30 als auch in die mantelflächenseitige Bohrung 37 des Spindelabschnitts 71 der Eingangswelle 3 eingreift (vgl. Zusammenschau von Fig 7 c) und 8). Über die formschlüssige Aufnahme des Sicherungsbolzens 36 in der Bohrung 37 und ebenso die in Umfangsrichtung gesehen formschlüssige Aufnahme des Sicherungsbolzens 36 in der Nut 35 ist die Vorspannmutter 30 gegen Verdrehung gesichert, also im Wesentlichen verdrehfest bzw. rotatorisch fest, mit dem Spindelabschnitt 71 der Eingangswelle 3 verbunden.

In die axiale Richtung gesehen ist Vorspannmutter 30 die innenliegende Verbindungsschubstange 77 derart umgebend angeordnet, dass die Vorspannmutter 30 zu der Verbindungsschubstange 77 axial relativ verschiebbar ist. Die Vorspannmutter 30 kann also die Position in axialer Richtung gegenüber der Verbindungsschubstange 77 verändern. Somit sind trotz in axialer Richtung und Umfangsrichtung gesicherter Position der Vorspannmutter 30 zu dem Spindelabschnitt 71 zumindest kleine axiale Relativbewegungen des Spindelabschnitts 71 der Eingangswelle 3 zu der Verbindungsschubstange 77 und demnach zu dem Eingangsabschnitt 72 der Eingangswelle 3 möglich, wie sie zuvor bereits detailliert beschrieben worden sind. Der axiale Bewegungsspielraum ist auch dadurch gegeben, dass die Nut 35 als Langloch ausgebildet ist, in dem sich der Sicherungsbolzen 36 in einem gewissen Maß entlang axial hin und her bewegen kann.

Die Vorspannmutter 30 liegt mit ihrer axialen Stirnfläche 32 an einer axialen Anlagefläche 38 der Ringfedern 91 an, drückt diese zusammen und übt durch die Kompression der Ringfedern 91 somit die gewünschte vorbestimmte Vorspannkraft auf die einstellbare Absorptionseinheit 23 aus.

Gemäß vorschlagsgemäßen Verfahren zum Einrichten der in den Fig. 7 und 8 teilweise dargestellten Servolenkbaugruppe ist also vorgesehen, dass als separate Vorspanneinheit 24 die Vorspannmutter 30 an die einstellbare Absorptionseinheit 23, konkret an das rechte Paket an Ringfedern 91 und im Speziellen an die axiale Anlagefläche 38 dieser Ringfedern 91, angrenzend zur Vorspannung durch gezielte Kompression der einstellbaren Absorptionseinheit 23 vorgesehen wird. Dabei wird die vorbestimmte Vorspannkraft eingestellt, indem die das Gewinde 33 aufweisende erste Komponente der separaten Vorspanneinheit 24 in Form der Vorspannmutter 30 und die mit der ersten Komponente in Eingriff stehende und das Gegengewinde 34 aufweisende zweite Komponenten in Form des Spindelabschnitts 71 der Eingangswelle 3 gegeneinander verdreht werden. Die Weite des Eindrehens des Gewindes 33 in das Gegengewinde 34 bestimmt dabei das Maß der Kompression der Ringfedern 91 und somit die eingestellte Vorspannkraft.

Durch die dargestellte Servolenkbaugruppe werden in vorteilhafter Weise die straßenseitigen Stöße wie folgt kompensiert: Der Eingangsabschnitt 72 der Eingangswelle 3 ist in seiner Position axial und radial gelagert. Stöße, die auf die Spindel 11 wirken, werden von den Paketen an Ringfedern 73 bzw. 91 gedämpft bzw. kompensiert. Bewegt sich beispielsweise die Spindel 11 in Richtung Eingangsabschnitt 72 nach rechts, so wird zunächst das linke Paket Ringfedern 73 gestaucht, ehe diese Bewegung schließlich an die Verbindungsschubstange 77 und somit an den Eingangsabschnitt 72 der Eingangswelle 3 weitergegeben wird.

Stöße, die beispielsweise in schlagartigen Bewegungen des Eingangsabschnitts 72 der Eingangswelle 3 entweder nach links, also in Richtung Spindelabschnitt 71, oder nach rechts, also weg vom Spindelabschnitt 71, resultieren, werden wie folgt kompensiert: Mit einer Bewegung des Eingangsabschnitts 72 nach links bewegt sich auch die Verbindungsschubstange 77 nach links, wodurch wiederum zunächst das linke Paket an Ringfedern 73 gestaucht wird, ehe die Bewegung an den Spindelabschnitt 71 weitergegeben wird. Umgekehrt, also wenn sich der Eingangsabschnitt 72 nach rechts bewegt, bewegt sich auch die Verbindungsschubstange 77 nach rechts, wodurch über die axiale Schubstangenanlage 31 zunächst das rechte Paket an Ringfedern 91 gestaucht wird. Sodann wird die Bewegung über die axialen Stirnfläche 32 der Vorspannmutter 30 an eben jene Vorspannmutter 30 und damit auch an den fest mit der Vorspannmutter 30 verbundenen Spindelabschnitt 71 weitergegeben.

Schließlich ist noch eine außenseitig angeordnete Schutzhülse 87 vorgesehen, welche ebenfalls eine spindelseitige Durchgangsbohrung 88 sowie eine eingangsseitige Durchgangsbohrung 89 aufweist. Die spindelseitige Durchgangsbohrung 88 ist mit der spindelseitigen Durchgangsbohrung 82 der Verbindungsschubstange 77 sowie dem Langloch 81 im Spindelabschnitt 71 in Übereinstimmung gebracht. Darüber hinaus erstreckt sich der spindelseitige Verbindungsstift 80 auch durch die spindelseitige Durchgangsbohrung 88 der Schutzhülse 87. Die eingangsseitige Durchgangsbohrung 89 wiederum ist mit der eingangsseitigen Durchgangsbohrung 83 der Verbindungsschubstange 77 sowie der Durchgangsbohrung 84 im Eingangsabschnitt 72 in Übereinstimmung gebracht. Darüber hinaus erstreckt sich der eingangsseitige Verbindungsstift 85 auch durch die spindelseitige Durchgangsbohrung 89 der Schutzhülse 87.

Die Schutzhülse umgibt somit insbesondere die Verbindungsschubstange 77 außenseitig sowie ferner den axialen Freiraum zwischen Spindelabschnitt 71 und Eingangsabschnitt 72. Ferner sorgt die Schutzhülse für eine außenseitige Führung der beiden voneinander getrennt ausgeführten Komponenten der Eingangswelle 3, nämlich des Spindelabschnitts 71 und des Eingangsabschnitts 72.

**Bezugszeichenliste:**

| | | | |
|---|---|---|---|
| 1 | Lenkgetriebe | 29 | Stirnfläche (der Vorspannein- |
| 2 | Eingangsseite (des Lenkgetrie- | | heit 24) |
| | bes 1) | 30 | Vorspannmutter |
| 3 | Eingangswelle | 31 | axiale Schubstangenanlage |
| 4 | Ausgangsseite (des Lenkgetriebes 1) | 32 | Stirnfläche (der Vorspannmutter 30) |
| 5 | Segmentwelle | 33 | Gewinde |
| 6 | Ausgangswelle | 34 | Gegengewinde |
| 7 | Schubstange | 35 | Nut |
| 8 | Lenkstockhebel | 36 | Sicherungsbolzen |
| 9 | Kugelgelenk | 37 | mantelflächenseitige Bohrung (des Spindelabschnitts 71) |
| 10 | Kraftfahrzeug | | |
| 11 | Spindel | 38 | axiale Anlagefläche (der Ringfedern 91) |
| 12 | Außenverzahnung (der Kugelumlaufmutter 13) | | |
| | | 55 | Zahnstange |
| 13 | Kugelumlaufmutter | 56 | Verzahnungsabschnitt |
| 14 | Segmentverzahnung (der Segmentwelle 5) | 57 | Tellerfedern |
| | | 58 | Elastomer |
| 15 | Lenkrad | 59 | sich axial erstreckender Einfuhrabschnitt (des Deckels 61) |
| 16 | Lenkhebel | | |
| 17, 19 | Räder (des Kraftfahrzeugs 10) | 60 | Kugeln |
| | | 61 | Planfläche (der zentralen Bohrung in der Zahnstange 55) |
| 18 | Lenkachse | | |
| 20 | Spurhebel | 62 | Deckel |
| 21 | Spurstange | 63 | Ringelement |
| 22 | Rahmen (des Kraftfahrzeugs 10) | 67, 68 | 8 Tellerfedern |
| | | 69 | Schrägkugellager (zweireihig) |
| 23 | einstellbare Absorptionseinheit | 70 | Gehäuse (des Lenkgetriebes) |
| 24 | Vorspanneinheit | 71 | Spindelabschnitt (der Eingangswelle 3) |
| 25 | zentrale Aufnahme (der Zahnstange 55) | | |
| | | 72 | Eingangsabschnitt (der Eingangswelle 3) |
| 26 | erste Ausgleichsscheibe | | |
| 27 | zweite Ausgleichsscheibe | 73 | Ringfedern |
| 28 | Öffnung | | |
| 74 | Aufnahme (des Spindelabschnitts 71) | 83 | eingangsseitige Durchgangsbohrung (der Verbindungsschubstange 77) |
| 75 | Ende des Spindelabschnitts 71 (dem Eingangsabschnitt 72 zugewandt) | | |
| | | 84 | Durchgangsbohrung (des Eingangsabschnitts 72) |
| 76 | Stirnfläche (der Verbindungsschubstange 77) | 85 | eingangsseitiger Verbindungsstift |
| 77 | Verbindungsschubstange | 86 | Ende des Eingangsabschnitts 72 (dem Spindelabschnitt 71 zugewandt) |
| 78 | Ende der Verbindungsschubstange 77 (dem Eingangsabschnitt 72 zugewandt) | | |
| | | 87 | Schutzhülse |
| 79 | Aufnahme (des Eingangsabschnitts 72) | 88 | spindelseitige Durchgangsbohrung (der Schutzhülse) |
| 80 | spindelseitiger Verbindungsstift | 89 | eingangsseitige Durchgangsbohrung (der Schutzhülse) |
| 81 | Langloch (des Spindelabschnitts 71) | | |
| | | 91 | Ringfedern |
| 82 | spindelseitige Durchgangsbohrung (der Verbindungsschubstange 77) | | |

## Patentansprüche

1. Servolenkbaugruppe für eine elektro-mechanische Servolenkung von Kraftfahrzeugen (10), insbesondere Nutzfahrzeugen, mit einem Lenkgetriebe (1), wobei das Lenkgetriebe (1) dazu eingerichtet ist, eine von einem Lenkgeber, insbesondere von einem Lenkrad (15), über eine Eingangsseite (2) des Lenkgetriebes (1) in Form einer Eingangswelle (3) des Lenkgetriebes (1) eingeleitete Drehbewegung (III) an eine Ausgangsseite (4) des Lenkgetriebes (1) weiterzuleiten, wobei die Eingangswelle (3) zumindest abschnittsweise als Spindel (11) ausgebildet ist, wobei das Lenkgetriebe (1), zur Umsetzung der Drehbewegung (III) der Eingangswelle (3) in eine translatorische Bewegung (IV), eine Kugelumlaufmutter (13) aufweist, und wobei die Servolenkbaugruppe dazu eingerichtet ist, eine aus der Ausgangsseite (4) des Lenkgetriebes (1) ausgeleitete Bewegung (I) in eine Drehbewegung (V) wenigstens eines Rads (17; 19) des Kraftfahrzeugs (10) um eine Lenkachse (18) umzuwandeln, **dadurch gekennzeichnet, dass** eine einstellbare Absorptionseinheit (23) zur wenigstens teilweisen Absorption von straßenseitigen, über das Rad (17; 19) des Kraftfahrzeugs (10) aufgenommenen Stößen vorgesehen ist, wobei eine separate Vorspanneinheit (24) vorgesehen ist, welche separate Vorspanneinheit (24) derart mit der einstellbaren Absorptionseinheit (23) zusammenwirkend eingerichtet ist, dass eine vorbestimmte Vorspannkraft auf die einstellbare Absorptionseinheit (23) ausgeübt ist, wobei zumindest eines der folgenden Merkmale erfüllt ist:
(i) das Lenkgetriebe (1) weist ferner eine Zahnstange (55) zur Umsetzung der Drehbewegung (III) der Eingangswelle (3) in die translatorische Bewegung (IV) auf, wobei die Zahnstange (55) außenseitig einen die Kugelumlaufmutter (13) außenseitig umgebenden Verzahnungsabschnitt (56) aufweist und ein separates Bauteil zu der Kugelumlaufmutter (13) ist, wobei die Kugelumlaufmutter (13) und die Zahnstange (55) in Richtung entsprechend der translatorischen Bewegung (IV) der Kugelumlaufmutter (13) relativ zueinander beweglich eingerichtet sind, wobei die einstellbare Absorptionseinheit (23) derart zwischen den relativ zueinander beweglich eingerichteten Komponenten in Form der Kugelumlaufmutter (13) und der Zahnstange (55) angeordnet und in den Aufbau der Kugelumlaufmutter (13) eingebunden ist, dass die translatorische Bewegung (IV) der Kugelumlaufmutter (13) über die einstellbare Absorptionseinheit (23) auf den Verzahnungsabschnitt 56) übertragen wird und umgekehrt; oder
(ii) die einstellbare Absorptionseinheit (23) ist als axiale elastische Spindellagerung der Eingangswelle (3) und durch wenigstens ein elastisches Element (67; 68) gebildet, wobei das wenigstens eine elastische Element (67; 68) an einen Außenring einer Lageranordnung (69) der Eingangswelle (3) zur drehbaren Lagerung der Eingangswelle (3) in einem Gehäuse (70) derart angrenzend angeordnet ist, dass die Lageranordnung (69) der Eingangswelle (3) über das wenigstens eine elastische Element (67; 68) axial elastisch im Gehäuse (70) aufgenommen ist; oder
(iii) die einstellbare Absorptionseinheit (23) ist als axiale elastische Spindellagerung der Eingangswelle gebildet, wobei die Eingangswelle (3) mehrteilig durch zumindest einen der Kugelumlaufmutter (13) zugewandten Spindelabschnitt (71) und einen Eingangsabschnitt (72) ausgebildet ist, und wobei der Spindelabschnitt (71) und der Eingangsabschnitt (72) rotatorisch fest aber über die einstellbare Absorptionseinheit (23) axial elastisch miteinander verbunden sind.

2. Servolenkbaugruppe nach Anspruch 1, **dadurch gekennzeichnet, dass** die separate Vorspanneinheit (24) wenigstens eine erste Ausgleichsscheibe (26) umfasst.

3. Servolenkbaugruppe nach Anspruch 2, **dadurch gekennzeichnet, dass** die separate Vorspanneinheit (24) ferner wenigstens eine zweite Ausgleichsscheibe (27), insbesondere einer zweiten Dicke (d2), die vorzugsweise von einer ersten Dicke (d1) der ersten Ausgleichsscheibe (26) abweicht, umfasst.

4. Servolenkbaugruppe nach einem der Ansprüche 1 bis 3, **dadurch gekennzeichnet, dass** die separate Vorspanneinheit (24) eine Vorspannmutter (30) umfasst.

5. Servolenkbaugruppe nach einem der Ansprüche 1 bis 4, **dadurch gekennzeichnet, dass** die separate Vorspanneinheit (24) derart mit der einstellbaren Absorptionseinheit (23) zusammenwirkend eingerichtet ist, dass die vorbestimmte Vorspannkraft mittels zweier über Gewinde (33) und Gegengewinde (34) miteinander in Eingriff stehenden Komponenten, vorzugsweise im Wesentlichen stufenlos, einstellbar ist.

6. Servolenkbaugruppe nach einem der Ansprüche 1 bis 5, **dadurch gekennzeichnet, dass** die separate Vorspanneinheit (24) und die einstellbare Absorptionseinheit (23) im montierten Zustand in axialer Richtung relativ zueinander zumindest teilweise verschiebbar sind.

7. Servolenkbaugruppe nach einem der Ansprüche 1 bis 6, **dadurch gekennzeichnet, dass** die separate Vorspanneinheit (24) im montierten Zustand gegen eine Rotation in Umfangsrichtung, insbesondere über einen in eine Nut (35) eingreifenden Sicherungsbolzen (36), gesichert ist.

8. Servolenkbaugruppe nach einem der Ansprüche 1 bis 7, **dadurch gekennzeichnet, dass** die separate Vorspanneinheit (24) eine Stirnfläche (29; 32) aufweist, welche Stirnfläche (29; 32) zur Ausübung der vorbestimmten Vorspannkraft auf die einstellbare Absorptionseinheit (23) eine Kontaktfläche zur unmittelbaren Anlage an die einstellbare Absorptionseinheit (23) ausbildet.

9. Verfahren zum Einrichten einer Servolenkbaugruppe für eine elektro-mechanische Servolenkung von Kraftfahrzeugen (10) nach einem der Ansprüche 1 bis 8, **dadurch gekennzeichnet, dass** die einstellbare Absorptionseinheit (23) zur wenigstens teilweisen Absorption von straßenseitigen, über das Rad (17; 19) des Kraftfahrzeugs (10) aufgenommenen Stößen in den Umwandlungsstrang der Lenkbewegung der gesamten Servolenkbaugruppe integriert wird, **dass** ferner die separate Vorspanneinheit (24) vorgesehen wird, **und dass** schließlich eine vorbestimmte Vorspannkraft eingestellt wird, welche vorbestimmte Vorspannkraft auf die einstellbare Absorptionseinheit (23) ausgeübt wird, indem die separate Vorspanneinheit (24) die einstellbare Absorptionseinheit (23) komprimiert.

10. Verfahren nach Anspruch 9, **dadurch gekennzeichnet, dass** als separate Vorspanneinheit (24) wenigstens eine erste Ausgleichsscheibe (26) an die einstellbare Absorptionseinheit (23) angrenzend zur Vorspannung durch gezielte Kompression der einstellbaren Absorptionseinheit (23) vorgesehen wird.

11. Verfahren nach Anspruch 10, **dadurch gekennzeichnet, dass** ferner eine zweite Ausgleichsscheibe (27) an die einstellbare Absorptionseinheit (23) angrenzend zur Vorspannung durch gezielte Kompression der einstellbaren Absorptionseinheit (23) vorgesehen wird, wobei, vorzugsweise, die zweite Ausgleichsscheibe (27) eine zweiten Dicke (d2) aufweist, die von einer ersten Dicke (d1) der ersten Ausgleichsscheibe (26) abweicht.

12. Verfahren nach einem der Ansprüche 9 bis 11, **dadurch gekennzeichnet, dass** als separate Vorspanneinheit (24) eine Vorspannmutter (30) an die einstellbare Absorptionseinheit (23) angrenzend zur Vorspannung durch gezielte Kompression der einstellbaren Absorptionseinheit (23) vorgesehen wird.

13. Verfahren nach einem der Ansprüche 9 bis 12, **dadurch gekennzeichnet, dass** die vorbestimmte Vorspannkraft eingestellt wird, indem eine ein Gewinde (33) aufweisende erste Komponente der separaten Vorspanneinheit (24) und eine mit der ersten Komponente in Eingriff stehende und ein Gegengewinde (34) aufweisende zweite Komponenten gegeneinander verdreht werden.

14. Verfahren nach einem der Ansprüche 9 bis 13, **dadurch gekennzeichnet, dass** die separate Vorspanneinheit (24) schließlich gegen ein Verdrehen in Umfangsrichtung gesichert wird.

15. Verfahren nach Anspruch 14, **dadurch gekennzeichnet, dass** die Sicherung über das Vorsehen eines in eine Nut (35) im Umfangsrichtung formschlüssig eingreifenden Sicherungsbolzens (36) vorgenommen wird.

## Claims

1. Power steering assembly for electromechanical power steering of motor vehicles (10), in particular commercial vehicles, having a steering gear (1), wherein the steering gear (1) is configured to transmit a rotational movement (III) introduced by a steering device, in particular by a steering wheel (15), through an input side (2) of the steering gear (1) in the form of an input shaft (3) of the steering gear (1), to an output side (4) of the steering gear (1), wherein the input shaft (3) is formed at least in sections as a spindle (11), wherein the steering gear (1) comprises a ball screw nut (13) for converting the rotational movement (III) of the input shaft (3) into a translational movement (IV), and wherein the power steering assembly is configured to convert a movement (I) derived from the output side (4) of the steering gear (1) into a rotational movement (V) of at least one wheel (17; 19) of the motor vehicle (10) about a steering axle (18), **characterized in that** an adjustable absorption unit (23) is provided for at least partial absorption of road-induced shocks received through the wheel (17; 19) of the motor vehicle (10), wherein a separate preload unit (24) is provided, which separate preload unit (24) is configured to interact with the adjustable absorption unit (23) such that a predetermined preload force is applied to the adjustable absorption unit (23), wherein at least one of the following features is fulfilled:
(i) the steering gear (1) further comprises a rack (55) for converting the rotational movement (III) of the input shaft (3) into the translational movement (IV), wherein the rack (55) has, on an outer side, a toothing section (56) that surrounds the ball screw nut (13) on the outside and is a separate component from the ball screw nut (13), wherein the ball screw nut (13) and the rack (55) are configured to be movable relative to one another in a direction corresponding to the translational movement (IV) of the ball screw nut (13), wherein the adjustable absorption unit (23) is arranged between the components configured to be movable relative to one another, in the form of the ball screw nut (13) and the rack (55), and is integrated into the structure of the ball screw nut (13), such that the translational movement (IV) of the ball screw nut (13) is transmitted via the adjustable absorption unit (23) to the toothing section (56) and vice versa; or
(ii) the adjustable absorption unit (23) is formed as an axial elastic spindle bearing of the input shaft (3) and by at least one elastic element (67; 68), wherein the at least one elastic element (67; 68) is arranged adjacent to an outer ring of a bearing arrangement (69) of the input shaft (3) for rotatable bearing of the input shaft (3) in a housing (70), such that the bearing arrangement (69) of the input shaft (3) is received axially elastically in the housing (70) via the at least one elastic element (67; 68); or
(iii) the adjustable absorption unit (23) is formed as an axial elastic spindle bearing of the input shaft, wherein the input shaft (3) is formed in multiple parts by at least one spindle section (71) facing the ball screw nut (13) and an input section (72), and wherein the spindle section (71) and the input section (72) are connected to one another so as to be rotationally fixed but axially elastic via the adjustable absorption unit (23).

2. Power steering assembly according to claim 1, **characterized in that** the separate preload unit (24) comprises at least one first compensation washer (26).

3. Power steering assembly according to claim 2, **characterized in that** the separate preload unit (24) further comprises at least one second compensation washer (27), in particular of a second thickness (d2), which preferably differs from a first thickness (d1) of the first compensation washer (26).

4. Power steering assembly according to any one of claims 1 to 3, **characterized in that** the separate preload unit (24) comprises a preload nut (30).

5. Power steering assembly according to any one of claims 1 to 4, **characterized in that** the separate preload unit (24) is configured to interact with the adjustable absorption unit (23) such that the predetermined preload force is adjustable, preferably substantially continuously, via two components engaging with one another via a thread (33) and a counter-thread (34).

6. Power steering assembly according to any one of claims 1 to 5, **characterized in that** the separate preload unit (24) and the adjustable absorption unit (23) are, in an assembled state, at least partially movable relative to one another in an axial direction.

7. Power steering assembly according to any one of claims 1 to 6, **characterized in that** the separate preload unit (24) is secured, in the assembled state, against rotation in a circumferential direction, in particular via a securing pin (36) engaging with a groove (35).

8. Power steering assembly according to any one of claims 1 to 7, **characterized in that** the separate preload unit (24) has an end face (29; 32), which end face (29; 32) forms a contact surface for directly bearing against the adjustable absorption unit (23) so as to apply the predetermined preload force to the adjustable absorption unit (23).

9. Method for configuring a power steering assembly for electromechanical power steering of motor vehicles (10) according to any one of claims 1 to 8, **characterized in that** the adjustable absorption unit (23) for at least partial absorption of road-induced shocks received through the wheel (17; 19) of the motor vehicle (10) is integrated into the conversion path of the steering movement of the entire power steering assembly, **in that** furthermore the separate preload unit (24) is provided, **and in that** finally a predetermined preload force is set, which predetermined preload force is applied to the adjustable absorption unit (23) **in that** the separate preload unit (24) compresses the adjustable absorption unit (23).

10. Method according to claim 9, **characterized in that**, as the separate preload unit (24), at least one first compensation washer (26) is provided adjacent to the adjustable absorption unit (23) for preloading by targeted compression of the adjustable absorption unit (23).

11. Method according to claim 10, **characterized in that** furthermore a second compensation washer (27) is provided adjacent to the adjustable absorption unit (23) for preloading by targeted compression of the adjustable absorption unit (23), wherein, preferably, the second compensation washer (27) has a second thickness (d2) that differs from a first thickness (d1) of the first compensation washer (26).

12. Method according to any one of claims 9 to 11, **characterized in that**, as the separate preload unit (24), a preload nut (30) is provided adjacent to the adjustable absorption unit (23) for preloading by targeted compression of the adjustable absorption unit (23).

13. Method according to any one of claims 9 to 12, **characterized in that** the predetermined preload force is set by rotating, with respect to one another, a first component of the separate preload unit (24) having a thread (33) and a second component engaging with the first component and having a counter-thread (34).

14. Method according to any one of claims 9 to 13, **characterized in that** the separate preload unit (24) is finally secured to prevent rotation in a circumferential direction.

15. Method according to claim 14, **characterized in that** securing is achieved by providing a securing pin (36) that engages in a form-fitting manner with a groove (35) in the circumferential direction.

## Revendications

1. Ensemble de direction assistée pour une direction assistée électromécanique de véhicules automobiles (10), en particulier de véhicules utilitaires, avec un mécanisme de direction (1), dans lequel le mécanisme de direction (1) est configuré pour transmettre un mouvement de rotation (III) introduit par un actionneur de direction, en particulier par un volant de direction (15), par l'intermédiaire d'un côté entrée (2) du mécanisme de direction (1) sous forme d'un arbre d'entrée (3) du mécanisme de direction (1) vers un côté sortie (4) du mécanisme de direction (1), dans lequel l'arbre d'entrée (3) est réalisé au moins par sections en tant que broche (11), dans lequel le mécanisme de direction (1) présente, pour convertir le mouvement de rotation (III) de l'arbre d'entrée (3) en un mouvement de translation (IV), un écrou à billes (13), et dans lequel l'ensemble de direction assistée est configuré pour convertir un mouvement (I) issu du côté sortie (4) du mécanisme de direction (1) en un mouvement de rotation (V) d'au moins une roue (17 ; 19) du véhicule automobile (10) autour d'un axe de direction (18), **caractérisé en ce qu'**une unité d'absorption réglable (23) est prévue pour absorber au moins partiellement des chocs provenant de la route et transmis par la roue (17 ; 19) du véhicule automobile (10), dans lequel une unité de précontrainte séparée (24) est prévue, laquelle unité de précontrainte séparée (24) est configurée de manière à coopérer avec l'unité d'absorption réglable (23) de sorte qu'une force de précontrainte prédéterminée est exercée sur l'unité d'absorption réglable (23), dans lequel au moins une des caractéristiques suivantes est remplie :
(i) le mécanisme de direction (1) présente en outre une crémaillère (55) pour convertir le mouvement de rotation (III) de l'arbre d'entrée (3) en un mouvement de translation (IV), dans lequel la crémaillère (55) présente sur son côté extérieur une section de denture (56) entourant l'écrou à billes (13) sur son côté extérieur et est un composant séparé de l'écrou à billes (13), dans lequel l'écrou à billes (13) et la crémaillère (55) sont configurés de manière à pouvoir se déplacer l'un par rapport à l'autre dans la direction correspondant au mouvement de translation (IV) de l'écrou à billes (13), dans lequel l'unité d'absorption réglable (23) est disposée entre les composants configurés de manière à pouvoir se déplacer l'un par rapport à l'autre sous forme de l'écrou à billes (13) et la crémaillère (55) et est intégrée dans la structure de l'écrou à billes (13) de sorte que le mouvement de translation (IV) de l'écrou à billes (13) est transmis à la section de denture (56) par l'intermédiaire de l'unité d'absorption réglable (23) et inversement ; ou
(ii) l'unité d'absorption réglable (23) est formée en tant que palier de broche élastique axial de l'arbre d'entrée (3) et par au moins un élément élastique (67 ; 68), dans lequel l'au moins un élément élastique (67 ; 68) est disposé de manière adjacente à une bague extérieure d'un agencement de palier (69) de l'arbre d'entrée (3) pour le montage rotatif de l'arbre d'entrée (3) dans un boîtier (70) de sorte que l'agencement de palier (69) de l'arbre d'entrée (3) est logé de manière élastique axialement dans le boîtier (70) par l'intermédiaire d'au moins un élément élastique (67 ; 68) ; ou
(iii) l'unité d'absorption réglable (23) est formée en tant que palier de broche élastique axial de l'arbre d'entrée, dans lequel l'arbre d'entrée (3) est formé en plusieurs parties par au moins une section de broche (71) faisant face à l'écrou à billes (13) et une section d'entrée (71), et dans lequel la section de broche (71) et la section d'entrée (72) sont connectées entre elles de manière non rotative, mais de manière élastique axialement par l'intermédiaire de l'unité d'absorption réglable (23).

2. Ensemble de direction assistée selon la revendication 1, **caractérisé en ce que** l'unité de précontrainte séparée (24) comprend au moins une première rondelle de compensation (26).

3. Ensemble de direction assistée selon la revendication 2, **caractérisé en ce que** l'unité de précontrainte séparée (24) comprend en outre au moins une seconde rondelle de compensation (27), en particulier d'une seconde épaisseur (d2), qui diffère de préférence d'une première épaisseur (d1) de la première rondelle de compensation (26).

4. Ensemble de direction assistée selon l'une quelconque des revendications 1 à 3, **caractérisé en ce que** l'unité de précontrainte séparée (24) comprend un écrou de précontrainte (30).

5. Ensemble de direction assistée selon l'une quelconque des revendications 1 à 4, **caractérisé en ce que** l'unité de précontrainte séparée (24) est configurée de manière à coopérer avec l'unité d'absorption réglable (23) de sorte que la force de précontrainte prédéterminée est réglable, de préférence de manière sensiblement continue, au moyen de deux composants en prise l'un avec l'autre par l'intermédiaire d'un filetage (33) et d'un contre-filetage (34).

6. Ensemble de direction assistée selon l'une quelconque des revendications 1 à 5, **caractérisé en ce que** l'unité de précontrainte séparée (24) et l'unité d'absorption réglable (23) peuvent être déplacées au moins partiellement l'une par rapport à l'autre en direction axiale à l'état monté.

7. Ensemble de direction assistée selon l'une quelconque des revendications 1 à 6, **caractérisé en ce que** l'unité de précontrainte séparée (24) est bloquée à l'état monté contre une rotation en direction circonférentielle, en particulier par l'intermédiaire d'un boulon de blocage (36) s'engageant dans une rainure (35).

8. Ensemble de direction assistée selon l'une quelconque des revendications 1 à 7, **caractérisé en ce que** l'unité de précontrainte séparée (24) présente une surface frontale (29 ; 32), laquelle surface frontale (29 ; 32) forme une surface de contact pour l'application directe sur l'unité d'absorption réglable (23) pour exercer la force de précontrainte prédéterminée sur l'unité d'absorption réglable (23).

9. Procédé de configuration d'un ensemble de direction assistée pour une direction assistée électromécanique de véhicules automobiles (10) selon l'une quelconque des revendications 1 à 8, **caractérisé en ce que** l'unité d'absorption réglable (23) est intégrée à la chaîne de conversion du mouvement de direction de l'ensemble de direction assistée pour une absorption au moins partielle de chocs provenant de la route et reçus par la roue (17 ; 19) du véhicule automobile (10), **en ce qu'**en outre l'unité de précontrainte séparée (24) est prévue, et **en ce qu'**enfin une force de précontrainte prédéterminée est définie, laquelle force de précontrainte prédéterminée est exercée sur l'unité d'absorption réglable (23), **en ce que** l'unité de précontrainte séparée (24) comprime l'unité d'absorption réglable (23).

10. Procédé selon la revendication 9, **caractérisé en ce qu'**au moins une première rondelle de compensation (26) est prévue en tant qu'unité de précontrainte séparée (24) adjacente à l'unité d'absorption réglable (23) pour la précontrainte par compression ciblée de l'unité d'absorption réglable (23).

11. Procédé selon la revendication 10, **caractérisé en ce qu'**une seconde rondelle de compensation (27) adjacente à l'unité d'absorption réglable (23) pour la précontrainte par compression ciblée de l'unité d'absorption réglable (23) est en outre prévue, dans lequel la seconde rondelle de compensation (27) présente de préférence une seconde épaisseur (d2) qui diffère d'une première épaisseur (d1) de la première rondelle de compensation (26).

12. Procédé selon l'une quelconque des revendications 9 à 11, **caractérisé en ce qu'**un écrou de précontrainte (30) est prévu en tant qu'unité de précontrainte séparée (24) de manière adjacente de l'unité d'absorption réglable (23) pour la précontrainte par compression ciblée de l'unité d'absorption réglable (23).

13. Procédé selon l'une quelconque des revendications 9 à 12, **caractérisé en ce que** la force de précontrainte prédéterminée est réglée **en ce qu'**un premier composant de l'unité de précharge séparée (24) présentant un filetage (33) et un second composant s'engageant avec le premier composant et présentant un contre-filet (34) sont tournés l'un contre l'autre.

14. Procédé selon l'une quelconque des revendications 9 à 13, **caractérisé en ce que** l'unité de précontrainte séparée (24) est enfin bloquée contre une rotation en direction circonférentielle.

15. Procédé selon la revendication 14, **caractérisé en ce que** le blocage est réalisé par la présence d'un boulon de blocage (36) s'engageant par complémentarité de forme dans une rainure (35) en direction circonférentielle.
